(19) Europäisches Patentamt
European Patent Office
Office européen des brevets

(11) **EP 4 510 739 A1**

(12) **EUROPEAN PATENT APPLICATION**
published in accordance with Art. 153(4) EPC

(43) Date of publication:
**19.02.2025 Bulletin 2025/08**

(21) Application number: **23795215.5**

(22) Date of filing: **21.04.2023**

(51) International Patent Classification (IPC):
**H04W 72/04** $^{(2023.01)}$

(52) Cooperative Patent Classification (CPC):
**H04B 7/0413; H04L 5/00; H04W 72/04**

(86) International application number:
**PCT/CN2023/089749**

(87) International publication number:
**WO 2023/207782 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.04.2022 CN 202210441001**

(71) Applicant: **Huawei Technologies Co., Ltd.**
**Shenzhen, Guangdong 518129 (CN)**

(72) Inventors:
• **LIU, Lei**
**Shenzhen, Guangdong 518129 (CN)**
• **BI, Xiaoyan**
**Shenzhen, Guangdong 518129 (CN)**
• **LIU, Yong**
**Shenzhen, Guangdong 518129 (CN)**
• **WANG, Ting**
**Shenzhen, Guangdong 518129 (CN)**
• **JIANG, Chenglong**
**Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **COMMUNICATION METHOD AND COMMUNICATION APPARATUS**

(57) Embodiments of this application provide a communication method and a communication apparatus. The method includes: A first communication apparatus receives a first indication parameter. There is a correspondence between the first indication parameter and first codeword-to-layer mapping. The first communication apparatus determines the first codeword-to-layer mapping based on the first indication parameter. Based on the method, in embodiments of this application, codeword-to-layer mapping can be dynamically adjusted and/or indicated. For example, a terminal device may use different codeword-to-layer mapping at different moments. For another example, different terminal devices may use different codeword-to-layer mapping at a same moment. Therefore, in a scenario in which a performance difference between streams of the terminal devices is large or a scenario in which a performance difference between streams at different moments is large, the different codeword-to-layer mapping may be used, and transmission of more streams may also be supported, to meet a requirement of a gradually enlarged scale of transmit antennas and receive antennas of a multiple-input multiple-output system.

FIG. 2

## Description

This application claims priority to Chinese Patent Application No. 202210441001.4, filed with the China National Intellectual Property Administration on April 25, 2022 and entitled "COMMUNICATION METHOD AND COMMUNICATION APPARATUS", which is incorporated herein by reference in its entirety.

## TECHNICAL FIELD

Embodiments of this application relate to the field of communication technologies, and more specifically, to a communication method and a communication apparatus.

## BACKGROUND

Multiple-input multiple-output (multiple-input multiple-output, MIMO) is a core technology of a 5th generation (5th generation, 5G) communication system. In the MIMO, signals are separately transmitted and received through a plurality of transmit antennas at a transmit end and a plurality of receive antennas at a receive end, to implement multiple-transmit multiple-receive and improve communication quality. A new radio (new radio, NR) communication system supports MIMO transmission, and concepts such as a codeword and a layer are defined. There is a mapping relationship between the codeword and the layer.

To further increase a capacity of a MIMO system, a scale of transmit antennas and receive antennas of the MIMO system is continuously enlarged. Due to the continuously enlarged scale of transmit antennas and receive antennas, the MIMO system can support sharply increasing quantity of transport streams and quantity of terminal devices, and a single terminal device can also support dozens of transport streams. However, an existing codeword-to-layer mapping relationship cannot support such a high quantity of transport streams. In other words, the existing codeword-to-layer mapping relationship cannot meet a requirement of a gradually enlarged scale of transmit antennas and receive antennas of the MIMO system.

## SUMMARY

Embodiments of this application provide a communication method and a communication apparatus, to dynamically adjust and/or indicate codeword-to-layer mapping. For example, a terminal device may use different codeword-to-layer mapping at different moments. For another example, different terminal devices may use different codeword-to-layer mapping at a same moment. Therefore, in a scenario in which a performance difference between streams of the terminal devices is large or a scenario in which a performance difference between streams at the different moments is large, the different codeword-to-layer mapping may be used, and transmission of more streams may also be supported, so that the codeword-to-layer mapping can meet a requirement of a gradually enlarged scale of transmit antennas and receive antennas of a MIMO system.

According to a first aspect, a communication method is provided, including: A first communication apparatus receives a first indication parameter. There is a correspondence between the first indication parameter and first codeword-to-layer mapping. The first communication apparatus determines the first codeword-to-layer mapping based on the first indication parameter.

Specifically, different first indication parameters correspond to different codeword-to-layer mapping. The first communication apparatus receives the different first indication parameters, and determines corresponding first codeword-to-layer mapping based on a received first indication parameter, to flexibly use the different codeword-to-layer mapping. In this case, the codeword-to-layer mapping used by the first communication apparatus can be flexibly adjusted, so that a codeword-to-layer mapping relationship used by the first communication apparatus can meet a requirement of a gradually enlarged scale of transmit antennas and receive antennas of a MIMO system.

It may be understood that the foregoing codeword-to-layer mapping may include a codeword-to-layer mapping table, or may include a specific row or column in the codeword-to-layer mapping table. Therefore, that there is a correspondence between the first indication parameter and first codeword-to-layer mapping may be understood as that there is a correspondence between the first indication parameter and the first codeword-to-layer mapping table, or may be understood as that there is a correspondence between the first indication parameter and the specific row or column in the first codeword-to-layer mapping table. Understanding of the correspondence between the first indication parameter and the first codeword-to-layer mapping is not limited in this embodiment of this application.

Based on the foregoing technical solution, in this embodiment of this application, the codeword-to-layer mapping can be dynamically adjusted and/or indicated. For example, a terminal device may use different codeword-to-layer mapping at different moments. For another example, different terminal devices may use different codeword-to-layer mapping at a same moment. Therefore, in a scenario in which a performance difference between streams of the terminal devices is large or a scenario in which a performance difference between streams at the different moments is large, the different codeword-to-layer mapping may be used, and transmission of more streams may also be supported, so that the codeword-to-layer mapping can meet a requirement of a gradually enlarged scale of transmit antennas and receive antennas of a MIMO system.

With reference to the first aspect, in some implementations of the first aspect, the first indication parameter includes at least one of the following: a channel feature, a service characteristic, a communication apparatus capability, or scheduling information.

Specifically, the channel feature can represent performance of a stream and a difference between streams, the service characteristic can represent a requirement of a communication service, the communication apparatus capability can represent a processing capability of the communication apparatus, and the scheduling information can represent communication quality. The first indication parameter significantly affects the codeword-to-layer mapping relationship. In a scenario in which first indication parameters of the terminal devices differ greatly or in a scenario in which first indication parameters at the different moments differ greatly, a communication capability can be improved by using the different codeword-to-layer mapping.

With reference to the first aspect, in some implementations of the first aspect, the channel feature includes at least one of the following: a channel eigenvalue threshold, a signal-to-noise ratio threshold, a quantity of antenna ports, a scenario, a location, a channel path feature, a channel latency feature, or a spectrum.

With reference to the first aspect, in some implementations of the first aspect, the service characteristic includes at least one of the following: coverage, mobility, time sensitivity, latency, or reliability.

Services can be classified into different service types based on the service characteristic. The service type includes at least one of the following: enhanced mobile communication, ultra-reliable ultra-low latency communication, or machine type communication.

With reference to the first aspect, in some implementations of the first aspect, the communication apparatus capability includes at least one of the following: a maximum quantity of supported codewords, a maximum quantity of supported layers, or whether dynamic codeword-to-layer mapping is supported.

With reference to the first aspect, in some implementations of the first aspect, the scheduling information includes at least one of the following: a modulation scheme, a code rate, a transport block size, or a layer identifier.

With reference to the first aspect, in some implementations of the first aspect, the method further includes: The first communication apparatus sends a second indication parameter.

The terminal device reports the second indication parameter to a network device. The second indication parameter may be the same as the first indication parameter, or may be different from the first indication parameter. In this embodiment of this application, the network device can determine an appropriate first indication parameter based on the second indication parameter sent by the terminal device. In addition, the second indication parameter reported by the terminal device to the network device can affect a decision of the network device on codeword-to-layer mapping during data transmission. Then, the network device can determine the appropriate first indication parameter, to improve communication performance.

With reference to the first aspect, in some implementations of the first aspect, the method further includes: The first communication apparatus sends first indication information. The first indication information indicates whether the first indication parameter is applicable or whether the first indication parameter needs to be updated.

The terminal device feeds back, to the network device, indication information indicating whether the first indication parameter indicated by the network device is appropriate or needs to be updated. In this embodiment of this application, the network device can determine an appropriate first indication parameter based on the indication information sent by the terminal device. In addition, the indication information reported by the terminal device to the network device can affect a decision of the network device on codeword-to-layer mapping during data transmission. Then, the network device can determine the appropriate first indication parameter, to improve communication performance.

With reference to the first aspect, in some implementations of the first aspect, the method further includes: The first communication apparatus sends second indication information. The second indication information includes a recommended indication parameter.

The terminal device reports the recommended indication parameter to the network device. In this embodiment of this application, the network device can determine an appropriate first indication parameter based on the recommended indication parameter sent by the terminal device. In addition, the recommended indication parameter reported by the terminal device to the network device can affect a decision of the network device on codeword-to-layer mapping during data transmission. Then, the network device can determine the appropriate first indication parameter, to improve communication performance.

With reference to the first aspect, in some implementations of the first aspect, that the first communication apparatus determines the first codeword-to-layer mapping based on the first indication parameter includes: The first communication apparatus determines the correspondence between the first indication parameter and the first codeword-to-layer mapping based on the first indication parameter. The first communication apparatus determines the first codeword-to-layer mapping based on the first indication parameter and the correspondence between the first indication parameter and the first codeword-to-layer mapping.

With reference to the first aspect, in some implementations of the first aspect, that the first communication apparatus determines the first codeword-to-layer mapping based on the first indication parameter includes: The first communication apparatus receives the first indication parameter and the correspondence between the first indication parameter and the first codeword-to-layer mapping. The first communication apparatus determines the first codeword-to-layer mapping based on the first indication parameter and the correspondence between the first indication parameter and the first codeword-to-layer mapping.

With reference to the first aspect, in some implementations of the first aspect, that the first communication apparatus determines the first codeword-to-layer mapping based on the first indication parameter includes: The first communication apparatus determines the first codeword-to-layer mapping based on the first indication parameter and the correspondence between the first indication parameter and the first codeword-to-layer mapping. The correspondence between the first indication parameter and the first codeword-to-layer mapping is predefined.

With reference to the first aspect, in some implementations of the first aspect, that a first communication apparatus receives a first indication parameter includes: The first communication apparatus receives the first indication parameter sent by a second communication apparatus.

With reference to the first aspect, in some implementations of the first aspect, the codeword-to-layer mapping is mapping from a codeword identifier to a layer identifier or mapping from a quantity of codewords to a quantity of layers.

With reference to the first aspect, in some implementations of the first aspect, indication information of the first indication parameter and indication information of the correspondence between the first indication parameter and the first codeword-to-layer mapping are user-level indication information, user group-level indication information, or cell-level indication information.

With reference to the first aspect, in some implementations of the first aspect, indication information of the first indication parameter is user-level indication information, user group-level indication information, or cell-level indication information.

With reference to the first aspect, in some implementations of the first aspect, indication information of the correspondence between the first indication parameter and the first codeword-to-layer mapping is user-level indication information, user group-level indication information, or cell-level indication information.

With reference to the first aspect, in some implementations of the first aspect, the indication information of the first indication parameter and/or the correspondence is higher layer signaling or physical layer signaling.

According to a second aspect, a communication method is provided, including: A second communication apparatus determines a first indication parameter. There is a correspondence between the first indication parameter and first codeword-to-layer mapping. The second communication apparatus sends the first indication parameter to a first communication apparatus.

With reference to the second aspect, in some implementations of the second aspect, the first indication parameter includes at least one of the following: a channel feature, a service characteristic, a communication apparatus capability, or scheduling information.

With reference to the second aspect, in some implementations of the second aspect, the channel feature includes at least one of the following: a channel eigenvalue threshold, a signal-to-noise ratio threshold, a quantity of antenna ports, a scenario, a location, a channel path feature, a channel latency feature, or a spectrum.

With reference to the second aspect, in some implementations of the second aspect, the service characteristic includes at least one of the following: coverage, mobility, time sensitivity, latency, or reliability.

Services can be classified into different service types based on the service characteristic. The service type includes at least one of the following: enhanced mobile communication, ultra-reliable ultra-low latency communication, or machine type communication.

With reference to the second aspect, in some implementations of the second aspect, the communication apparatus capability includes at least one of the following: a maximum quantity of supported codewords, a maximum quantity of supported layers, or whether dynamic codeword-to-layer mapping is supported.

With reference to the second aspect, in some implementations of the second aspect, the scheduling information includes at least one of the following: a modulation scheme, a code rate, a transport block size, or a layer identifier.

With reference to the second aspect, in some implementations of the second aspect, the method further includes: The second communication apparatus sends the correspondence to the first communication apparatus.

With reference to the second aspect, in some implementations of the second aspect, the method further includes: The second communication apparatus receives a second indication parameter sent by the first communication apparatus. There is a correspondence between the second indication parameter and second codeword-to-layer mapping.

With reference to the second aspect, in some implementations of the second aspect, the method further includes: The second communication apparatus receives first indication information sent by the first communication apparatus. The first indication information indicates whether the first indication parameter is applicable or whether the first indication parameter needs to be updated.

With reference to the second aspect, in some implementations of the second aspect, the method further includes: The second communication apparatus receives second indication information sent by the first communication apparatus. The second indication information includes a recommended indication parameter.

With reference to the second aspect, in some implementations of the second aspect, the codeword-to-layer mapping is mapping from a codeword identifier to a layer identifier or mapping from a quantity of codewords to a quantity of layers.

With reference to the second aspect, in some implementations of the second aspect, indication information of the first indication parameter and indication information of the correspondence between the first indication parameter and the first codeword-to-layer mapping are user-level indication information, user group-level indication information, or cell-level indication information.

With reference to the second aspect, in some implementations of the second aspect, indication information of the first indication parameter is user-level indication information, user group-level indication information, or cell-level indication information.

With reference to the second aspect, in some implementations of the second aspect, indication information of the correspondence between the first indication parameter and the first codeword-to-layer mapping is user-level indication information, user group-level indication information, or cell-level indication information.

With reference to the second aspect, in some implementations of the second aspect, the indication information of the first indication parameter and/or the correspondence is higher layer signaling or physical layer signaling.

According to a third aspect, a communication apparatus is provided, including: a transceiver unit, configured to receive a first indication parameter, where there is a correspondence between the first indication parameter and first codeword-to-layer mapping; and a processing unit, configured to determine the first codeword-to-layer mapping based on the first indication parameter.

With reference to the third aspect, in some implementations of the third aspect, the first indication parameter includes at least one of the following: a channel feature, a service characteristic, a communication apparatus capability, or scheduling information.

With reference to the third aspect, in some implementations of the third aspect, the channel feature includes at least one of the following: a channel eigenvalue threshold, a signal-to-noise ratio threshold, a quantity of antenna ports, a scenario, a location, a channel path feature, a channel latency feature, or a spectrum.

With reference to the third aspect, in some implementations of the third aspect, the service characteristic includes at least one of the following: coverage, mobility, time sensitivity, latency, or reliability.

Services can be classified into different service types based on the service characteristic. The service type includes at least one of the following: enhanced mobile communication, ultra-reliable ultra-low latency communication, or machine type communication.

With reference to the third aspect, in some implementations of the third aspect, the communication apparatus capability includes at least one of the following: a maximum quantity of supported codewords, a maximum quantity of supported layers, or whether dynamic codeword-to-layer mapping is supported.

With reference to the third aspect, in some implementations of the third aspect, the scheduling information includes at least one of the following: a modulation scheme, a code rate, a transport block size, or a layer identifier.

With reference to the third aspect, in some implementations of the third aspect, the transceiver unit is further configured to send a second indication parameter. There is a correspondence between the second indication parameter and second codeword-to-layer mapping.

With reference to the third aspect, in some implementations of the third aspect, the transceiver unit is further configured to send first indication information. The first indication information indicates whether the first indication parameter is applicable or whether the first indication parameter needs to be updated.

With reference to the third aspect, in some implementations of the third aspect, the transceiver unit is further configured to send second indication information. The second indication information includes a recommended indication parameter.

With reference to the third aspect, in some implementations of the third aspect, the processing unit is configured to determine the correspondence between the first indication parameter and the first codeword-to-layer mapping based on the first indication parameter. The processing unit is further configured to determine the first codeword-to-layer mapping based on the first indication parameter and the correspondence between the first indication parameter and the first codeword-to-layer mapping.

With reference to the third aspect, in some implementations of the third aspect, the transceiver unit is configured to receive the correspondence between the first indication parameter and the first codeword-to-layer mapping. The processing unit is further configured to determine the first codeword-to-layer mapping based on the first indication parameter and the correspondence between the first indication parameter and the first codeword-to-layer mapping.

With reference to the third aspect, in some implementations of the third aspect, the processing unit is further configured to determine the first codeword-to-layer mapping based on the first indication parameter and the correspondence between the first indication parameter and the first codeword-to-layer mapping. The correspondence between the first indication parameter and the first codeword-to-layer mapping is predefined.

With reference to the third aspect, in some implementations of the third aspect, the transceiver unit is further configured to receive the first indication parameter sent by a second communication apparatus.

With reference to the third aspect, in some implementations of the third aspect, the codeword-to-layer mapping is mapping from a codeword identifier to a layer identifier or mapping from a quantity of codewords to a quantity of layers.

With reference to the third aspect, in some implementations of the third aspect, indication information of the first indication parameter and indication information of the correspondence between the first indication parameter and the first codeword-to-layer mapping are user-level indication information, user group-level indication information, or cell-level indication information.

With reference to the third aspect, in some implementations of the third aspect, indication information of the first indication parameter is user-level indication information, user group-level indication information, or cell-level indication information.

With reference to the third aspect, in some implementations of the third aspect, indication information of the correspondence between the first indication parameter and the first codeword-to-layer mapping is user-level indication information, user group-level indication information, or cell-level indication information.

With reference to the third aspect, in some implementations of the third aspect, the indication information of the first indication parameter and/or the correspondence is higher layer signaling or physical layer signaling.

According to a fourth aspect, a communication apparatus is provided, including: a processing unit, configured to determine a first indication parameter, where there is a correspondence between the first indication parameter and codeword-to-layer mapping; and a transceiver unit, configured to send the first indication parameter to a first communication apparatus.

With reference to the fourth aspect, in some implementations of the fourth aspect, the first indication parameter includes at least one of the following: a channel feature, a service characteristic, a communication apparatus capability, or scheduling information.

With reference to the fourth aspect, in some implementations of the fourth aspect, the channel feature includes at least one of the following: a channel eigenvalue threshold, a signal-to-noise ratio threshold, a quantity of antenna ports, a scenario, a location, a channel path feature, a channel latency feature, or a spectrum.

With reference to the fourth aspect, in some implementations of the fourth aspect, the service characteristic includes at least one of the following: coverage, mobility, time sensitivity, latency, or reliability.

Services can be classified into different service types based on the service characteristic. The service type includes at least one of the following: enhanced mobile communication, ultra-reliable ultra-low latency communication, or machine type communication.

With reference to the fourth aspect, in some implementations of the fourth aspect, the communication apparatus capability includes at least one of the following: a maximum quantity of supported codewords, a maximum quantity of supported layers, or whether dynamic codeword-to-layer mapping is supported.

With reference to the fourth aspect, in some implementations of the fourth aspect, the scheduling information includes at least one of the following: a modulation scheme, a code rate, a transport block size, or a layer identifier.

With reference to the fourth aspect, in some implementations of the fourth aspect, the transceiver unit is further configured to send the correspondence to the first communication apparatus.

With reference to the fourth aspect, in some implementations of the fourth aspect, the transceiver unit is further configured to receive a second indication parameter sent by the first communication apparatus. There is a correspondence between the second indication parameter and second codeword-to-layer mapping.

With reference to the fourth aspect, in some implementations of the fourth aspect, the transceiver unit is further configured to receive first indication information sent by the first communication apparatus. The first indication information indicates whether the first indication parameter is applicable or whether the first indication parameter needs to be updated.

With reference to the fourth aspect, in some implementations of the fourth aspect, the transceiver unit is further configured to receive second indication information sent by the first communication apparatus. The second indication information includes a recommended indication parameter.

With reference to the fourth aspect, in some implementations of the fourth aspect, the codeword-to-layer mapping is mapping from a codeword identifier to a layer identifier or mapping from a quantity of codewords to a quantity of layers.

With reference to the fourth aspect, in some implementations of the fourth aspect, indication information of the first indication parameter and indication information of the correspondence between the first indication parameter and the first codeword-to-layer mapping are user-level indication information, user group-level indication information, or cell-level indication information.

With reference to the fourth aspect, in some implementations of the fourth aspect, indication information of the first indication parameter is user-level indication information, user group-level indication information, or cell-level indication information.

With reference to the fourth aspect, in some implementations of the fourth aspect, indication information of the correspondence between the first indication parameter and the first codeword-to-layer mapping is user-level indication information, user group-level indication information, or cell-level indication information.

With reference to the fourth aspect, in some implementations of the fourth aspect, the indication information of the first indication parameter and/or the correspondence is higher layer signaling or physical layer signaling.

According to a fifth aspect, a communication apparatus is provided, including a processor. The processor is coupled to a memory, and the processor is configured to execute a computer program or instructions, to enable the communication apparatus to perform the method according to any one of the first aspect and the possible implementations of the first aspect, or enable the communication apparatus to perform the method according to any one of the second aspect and the possible implementations of the second aspect.

According to a sixth aspect, a communication apparatus is provided, including a logic circuit and an input/output interface. The logic circuit is configured to execute a computer program or instructions, to enable the communication apparatus to perform the method according to any one of the first aspect and the possible implementations of the first aspect, or enable the communication apparatus to perform the method according to any one of the second aspect and the possible implementations of the second aspect.

According to a seventh aspect, a computer-readable storage medium is provided, including a computer program or instructions. When the computer program or the instructions are run on a computer, the computer is enabled to perform the method according to any one of the first aspect and the possible implementations of the first aspect, or the computer is enabled to perform the method according to any one of the second aspect and the possible implementations of the second aspect.

According to an eighth aspect, a computer program product is provided, including instructions. When the instructions are run on a computer, the computer is enabled to perform the method according to any one of the first aspect and the possible implementations of the first aspect, or the computer is enabled to perform the method according to any one of the second aspect and the possible implementations of the second aspect.

## BRIEF DESCRIPTION OF DRAWINGS

FIG. 1 is a diagram of an architecture of a communication system applicable to an embodiment of this application;
FIG. 2 is an interaction diagram of a communication method according to an embodiment of this application;
FIG. 3 is an interaction diagram of another communication method according to an embodiment of this application;
FIG. 4 is an interaction diagram of still another communication method according to an embodiment of this application;
FIG. 5 is an interaction diagram of yet another communication method according to an embodiment of this application;
FIG. 6 is a schematic block diagram of a communication apparatus 600 according to an embodiment of this application;
FIG. 7 is a schematic block diagram of another communication apparatus 700 according to an embodiment of this application; and
FIG. 8 is a schematic block diagram of still another communication apparatus 800 according to an embodiment of this application.

## DESCRIPTION OF EMBODIMENTS

The following describes technical solutions in embodiments of this application with reference to accompanying drawings.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, Wi-MAX) communication system, a 5th generation (5th generation, 5G) system or new radio (new radio, NR), a future 6th generation (6th generation, 6G) system, inter-satellite communication system, and a satellite communication system. The satellite communication system includes a satellite base station and a terminal device. The satellite base station provides a communication service for the terminal device. The satellite base station may also communicate with a base station. The satellite may serve as a base station, or may serve as a terminal device. The satellite may be an uncrewed aerial vehicle, a hot air balloon, a low-orbit satellite, a medium-orbit satellite, a high-orbit satellite, or the like. The satellite may also refer to a non-terrestrial base station, a non-terrestrial device, or the like.

Embodiments of this application are applicable to both a homogeneous network scenario and a heterogeneous network scenario. In addition, a transmission reception point is not limited. Coordinated multipoint transmission may be performed between macro base stations, between micro base stations, or between a macro base station and a micro base station. Embodiments of this application are applicable to both an FDD system/a TDD system. Embodiments of this application are applicable to both a low-frequency scenario (sub 6G) and a high-frequency scenario (above 6 GHz), terahertz, optical communication, or the like. Embodiments of this application are not only applicable to communication between a network device and a terminal, but also applicable to communication between network devices, communication between terminals, and communication of an internet of vehicles, an internet of things, an industrial internet, and the like.

The terminal in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. Alternatively, the terminal device may be a satellite phone, a cellular phone, a smartphone, a wireless data card, a wireless modem, a machine type communication device, a cordless phone, a session start protocol (session initiation protocol, SIP) phone, a wireless local loop (wireless local loop, WLL) station, or a personal digital assistant (personal digital assistant, PDA) station, a handheld device having a wireless communication function, a computing device or another processing device connected to a wireless modem, a vehicle-mounted device, a communication device carried on a high-altitude aircraft, a wearable device, an uncrewed aerial vehicle, a robot, a terminal in device-to-device communication (device-to-device, D2D), a terminal in vehicle to everything (vehicle to everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in embodiments of this application.

In embodiments of this application, an apparatus configured to implement a function of the terminal device may be a terminal device, or may be an apparatus that can support the terminal device in implementing the function, for example, a chip system. The apparatus may be mounted in the terminal device or used together with the terminal device. In embodiments of this application, the chip system may include a chip, or may include the chip and another discrete component.

The network device in embodiments of this application is a device having a wireless transceiver function, and is configured to communicate with the terminal device. The access network device may be a node in a radio access network (radio access network, RAN), and may also be referred to as a base station or may be referred to as a RAN node. The access network device may be an evolved NodeB (evolved NodeB, eNB or eNodeB) in LTE, a base station in a 5G network, for example, a gNodeB (gNB), a base station in an evolved public land mobile network (public land mobile network, PLMN) after 5G, a broadband network service gateway (broadband network gateway, BNG), an aggregation switch, a 3rd generation partner project (3rd generation partnership project, 3GPP) access devices, or the like.

The network device in embodiments of this application may further include base stations in various forms, for example, a macro base station, a micro base station (also referred to as a small cell), a relay station, an access node in a Wi-Fi system, a transmission reception point (transmitting and receiving point, TRP), a transmission point (transmitting point, TP), a mobile switching center, and a device that undertakes a base station function in device-to-device (device-to-device, D2D), vehicle-to-everything (vehicle-to-everything, V2X), and machine-to-machine (machine-to-machine, M2M) communication, and may further include a central unit (central unit, CU) and a distributed unit (distributed unit, DU) in a cloud access network (cloud radio access network, C-RAN) system, and a network device in an NTN communication system. This is not specifically limited in embodiments of this application.

In embodiments of this application, an apparatus configured to implement a function of the network device may be a network device, or may be an apparatus that can support the network device in implementing the function, for example, a chip system. The apparatus may be mounted in the network device or used together with the network device. In embodiments of this application, the chip system may include a chip, or may include the chip and another discrete component.

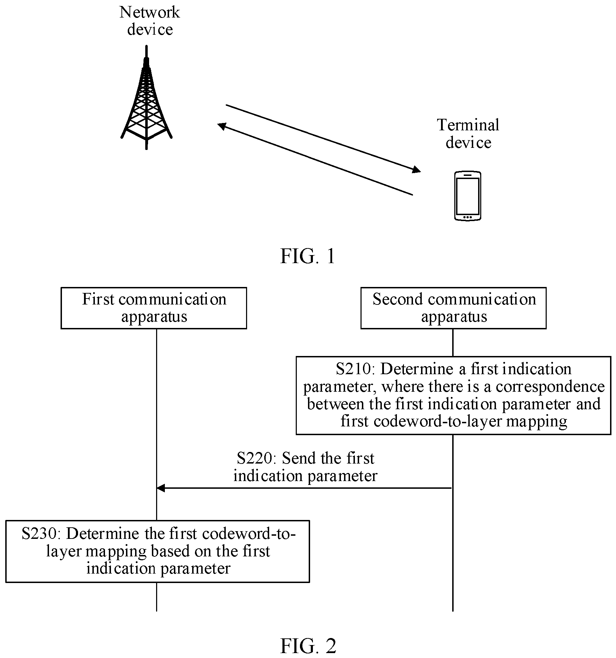

FIG. 1 is a diagram of an architecture of a communication system applicable to an embodiment of this application. The communication system includes a terminal device and a network device. Quantities of terminal devices and network devices included in the communication system are not limited in this embodiment of this application. The diagram shown in FIG. 1 is merely used as an example for description, and cannot limit an actual application scope of the technical solutions in embodiments of this application. The terminal device shown in FIG. 1 may be any one of the terminal devices listed above, and the network device may also be any one of the network devices listed above.

The following briefly describes related technical terms in embodiments of this application.

1. Codeword

The codeword (codeword, CW) is a data stream obtained by inserting a cyclic redundancy check (cyclic redundancy check, CRC) in a transport block (transmission block, TB) sent in a transmission time interval (transmission time interval, TTI), performing code block segmentation, inserting a CRC into each code block, performing channel coding, and performing rate matching. One codeword corresponds to one transport block. Through scrambling, modulation, and layer mapping, a codeword is mapped to a plurality of layers for parallel sending (where the layer may also be understood as a stream).

2. Codeword-to-layer mapping

The codeword-to-layer mapping (codeword-to-layer mapping) represents a layer mapping relationship between a codeword and a layer. To implement spatial multiplexing, the "layer" is used to map a modulation symbol of the codeword to different transmit layers. A quantity of layers is equal to a quantity of data streams that can be independently used for parallel transmission. A quantity of codewords is less than or equal to the quantity of layers, and the quantity of layers is less than or equal to a quantity of transmit antennas.

A table of the codeword-to-layer mapping is predefined in 3GPP TS 38.211 V17.0.0, as shown in Table 1. The terminal device and the network device may obtain the codeword-to-layer mapping by querying the table, to be specific, map a complex modulation symbol of each to-be-transmitted codeword to one or more layers. Complex modulation symbols $d^q(0), \dots, d^q(M_{\text{symb}}^{(q)} - 1)$ of a codeword q are mapped to layers $x(i) = [x^0(i) \ \dots \ x^{v-1}(i)]^T$, where $i = 0, 1, \dots, M_{\text{symb}}^{\text{layer}} - 1$, v represents a quantity of layers, and $M_{\text{symb}}^{\text{layer}}$ represents a quantity of modulation symbols on each layer. The complex modulation symbols of the codeword q are evenly mapped to the v layers in order. The predefined codeword-to-layer mapping table is used for both uplink and downlink transmission, but maximum quantities of supported layers in the uplink and downlink transmissions are different. The downlink transmission supports a maximum of two codewords and eight layers. The uplink transmission supports a maximum of one codeword and four layers.

**Table 1 Codeword-to-layer mapping for spatial multiplexing**

| Quantity of layers | Quantity of codewords | Codeword-to-layer mapping, where $i=0, 1, \dots, M_{\text{symb}}^{layer}-1$ |
|---|---|---|
| 1 | 1 | $x^0(i)=d^0(i)$ <br><br> $M_{symb}^{layer}=M_{symb}^0$ |
| 2 | 1 | $x^0(i)=d^0(2i)$ <br> $x^1(i)=d^0(2i+1)$ <br><br> $M_{symb}^{layer}=M_{symb}^0/2$ |
| 3 | 1 | $x^0(i)=d^0(3i)$ <br> $x^1(i)=d^0(3i+1)$ <br> $x^2(i)=d^0(3i+2)$ <br><br> $M_{symb}^{layer}=M_{symb}^0/3$ |
| 4 | 1 | $x^0(i)=d^0(4i)$ <br> $x^1(i)=d^0(4i+1)$ <br> $x^2(i)=d^0(4i+2)$ <br> $x^3(i)=d^0(4i+3)$ <br><br> $M_{symb}^{layer}=M_{symb}^0/4$ |
| 5 | 2 | $x^0(i)=d^0(2i)$ <br> $x^1(i)=d^0(2i+1)$ <br> $x^2(i)=d^1(3i)$ |

(continued)

| Quantity of layers | Quantity of codewords | Codeword-to-layer mapping, where $i=0, 1, ..., M^{layer}_{symb}-1$ |
|---|---|---|
| | | $x^3(i)=d^1(3i+1)$<br>$x^4(i)=d^1(3i+2)$<br><br>$M^{layer}_{symb}=M^0_{symb}/2=M^1_{symb}/3$ |
| 6 | 2 | $x^0(i)=d^0(3i)$<br>$x^1(i)=d^0(3i+1)$<br>$x^2(i)=d^0(3i+2)$<br>$x^3(i)=d^1(3i)$<br>$x^4(i)=d^1(3i+1)$<br>$x^5(i)=d^1(3i+2)$<br><br>$M^{layer}_{symb}=M^0_{symb}/3=M^1_{symb}/3$ |
| 7 | 2 | $x^0(i)=d^0(3i)$<br>$x^1(i)=d^0(3i+1)$<br>$x^2(i)=d^0(3i+2)$<br>$x^3(i)=d^1(4i)$<br>$x^4(i)=d^1(4i+1)$<br>$x^5(i)=d^1(4i+2)$<br>$x^6(i)=d^1(4i+3)$<br><br>$M^{layer}_{symb}=M^0_{symb}/3=M^1_{symb}/4$ |
| 8 | 2 | $x^0(i)=d^0(4i)$<br>$x^1(i)=d^0(4i+1)$<br>$x^2(i)=d^0(4i+2)$<br>$x^3(i)=d^0(4i+3)$<br>$x^4(i)=d^1(4i)$<br>$x^5(i)=d^1(4i+1)$<br>$x^6(i)=d^1(4i+2)$<br>$x^7(i)=d^1(4i+3)$<br><br>$M^{layer}_{symb}=M^0_{symb}/4=M^1_{symb}/4$ |

As a scale of transmit antennas and receive antennas of a MIMO system is gradually enlarged, the MIMO system further increases a quantity of data streams for parallel transmission. A quantity of data streams that can be supported by the MIMO system may increase to hundreds, and a quantity of terminal devices that can be supported also increases sharply. However, the foregoing codeword-to-layer mapping cannot support transmission of more than four layers (uplink)/eight layers (downlink). In addition, the codeword-to-layer mapping is fixed. To be specific, for a quantity of layers, a quantity of codewords that can be mapped to the layers is fixed, and all terminal devices use fixed mapping at all moments. This severely affects system capacity performance of the MIMO system in a scenario in which a performance difference between streams of the terminal devices is large or in a scenario in which a performance difference between streams at different moments is large. In general, an existing codeword-to-layer mapping relationship cannot meet a requirement of the gradually enlarged scale of the transmit antennas and receive antennas of the MIMO system.

Due to the foregoing technical problem, embodiments of this application provide a communication method and a communication apparatus, to dynamically adjust and/or indicate codeword-to-layer mapping. For example, a terminal device may use different codeword-to-layer mapping at different moments. For another example, different terminal devices may use different codeword-to-layer mapping at a same moment. Therefore, in a scenario in which a performance difference between streams of the terminal devices is large or a scenario in which a performance difference between streams at the different moments is large, different codeword-to-layer mapping may be used, and transmission of more streams may also be supported, so that the codeword-to-layer mapping can meet a requirement of a gradually enlarged scale of transmit antennas and receive antennas of a MIMO system.

The following describes the communication method according to embodiments of this application with reference to the accompanying drawings.

FIG. 2 is an interaction diagram of a communication method according to an embodiment of this application. The method #200 includes the following steps.

S210: A second communication apparatus determines a first indication parameter, where there is a correspondence between the first indication parameter and codeword-to-layer mapping.

In this embodiment of this application, descriptions of a technical solution for a codeword may be applied to a transport block, a code block, or a data block. For example, the codeword may be replaced with the transport block, the code block, or the data block. Descriptions of a technical solution for a layer may also be applied to a stream or a rank. For example, the layer may be replaced with the stream or the rank. The codeword-to-layer mapping may also be understood as similar expressions such as codeword-to-stream mapping, transport block-to-layer mapping, transport block-to-stream mapping, quantity of codewords-to-quantity of layers mapping, and codeword identifier-to-layer identifier mapping.

In this embodiment of this application, the foregoing codeword-to-layer mapping may include a codeword-to-layer mapping table, or may include a specific row or column in the codeword-to-layer mapping table. Therefore, that there is a correspondence between the first indication parameter and codeword-to-layer mapping may be understood as that there is a correspondence between the first indication parameter and the codeword-to-layer mapping table, or may be understood as that there is a correspondence between the first indication parameter and the specific row or column in the codeword-to-layer mapping table. Understanding of the correspondence between the first indication parameter and the codeword-to-layer mapping is not limited in this embodiment of this application.

For ease of description, in this embodiment of this application, an example in which there is the correspondence between the first indication parameter and the codeword-to-layer mapping table is used to describe technical solutions in embodiments of this application. However, a technical solution in which there is the correspondence between the first indication parameter and the specific row or column in the codeword-to-layer mapping table (where the mapping table may be the existing Table 1, or may be Table 2, Table 3, or another table in embodiments of this application) is not excluded. In addition, the two technical solutions are the same or similar. Therefore, in this embodiment of this application, the technical solution in which there is the correspondence between the first indication parameter and the specific row or column in the codeword-to-layer mapping table is not described in detail, and the correspondence between the first indication parameter and the codeword-to-layer mapping table is mainly described.

Specifically, the first indication parameter determined by the second communication apparatus is determined by the second communication apparatus in indication parameters, and the indication parameters include at least two candidate values of the first indication parameter. In other words, the second communication apparatus determines the first indication parameter in a plurality of candidate values of the indication parameters. Descriptions are further provided below.

Optionally, the indication parameter may be predefined, or may be indicated by the second communication apparatus to a first communication apparatus.

In a possible implementation, the first indication parameter includes at least one of the following: a channel feature, a service characteristic, a communication apparatus capability, scheduling information, or the like.

Specifically, the channel feature can represent performance of a stream and a difference between streams, the service characteristic can represent a requirement of a communication service, the communication apparatus capability can represent a processing capability of the communication apparatus, and the scheduling information can represent communication quality. The first indication parameter significantly affects a codeword-to-layer mapping relationship. In a scenario in which first indication parameters of terminal devices differ greatly or in a scenario in which first indication parameters at different moments differ greatly, a communication capability can be improved by using different codeword-to-layer mapping.

Specifically, when the first indication parameter includes the channel feature, the first indication parameter may include at least one of the channel feature. When the first indication parameter includes the service characteristic, the first indication parameter may include at least one of the service characteristic. When the first indication parameter includes the communication apparatus capability, the first indication parameter may include at least one of the communication apparatus capability. When the first indication parameter includes the scheduling information, the first indication parameter may include at least one of the scheduling information. The following specifically describes the first indication parameter.

For example, the channel feature includes at least one of the following: a channel eigenvalue threshold, a signal-to-noise ratio threshold, a quantity of antenna ports, a scenario, a location, a channel path feature, a channel latency feature, or a spectrum. The first indication parameter may include at least one of the channel eigenvalue threshold, the signal-to-noise ratio threshold, the quantity of antenna ports, the scenario, the location, the channel path feature, the channel latency feature, the spectrum, or the like. The indication parameter may include at least one of the channel eigenvalue threshold, the signal-to-noise ratio threshold, the quantity of antenna ports, the scenario, the location, the channel path feature, the channel latency feature, the spectrum, or the like. The service characteristic includes at least one of the following: coverage, mobility, time sensitivity, transmission latency, or reliability. The first indication parameter may include at least one of the coverage, the mobility, the time sensitivity, the transmission latency, the reliability, or the like. The indication parameter may include at least one of the coverage, the mobility, the time sensitivity, the transmission latency, the reliability, or the like. The communication apparatus capability includes at least one of the following: a maximum quantity of supported codewords, a maximum quantity of supported layers, or whether dynamic codeword-to-layer mapping is supported. The first indication parameter may include at least one of the maximum quantity of supported codewords, the maximum quantity of supported layers, whether the dynamic codeword-to-layer mapping is supported, or the like. The indication parameter may include at least one of the maximum quantity of supported codewords, the maximum quantity of supported layers, whether the codeword-to-layer dynamic mapping is supported, or the like. The scheduling information includes at least one of the following: a modulation scheme, a code rate, a transport block size (transport block size, TBS), or a layer identifier. The first indication parameter may include at least one of the modulation scheme, the code rate, the transport block size, the layer identifier, or the like. The indication parameter may include at least one of the modulation scheme, the code rate, the transport block size, the layer identifier, or the like.

In this embodiment of this application, services can be classified into different service types based on the service characteristic. The first communication apparatus or the second communication apparatus determines the codeword-to-layer mapping based on the service characteristic, and may further determine the codeword-to-layer mapping based on a service type. Specifically, the first indication parameter may include the service type. The indication parameter may include the service type. The indication parameter may include at least two of enhanced mobile broadband (enhanced mobile broadband, eMBB), ultra-reliable low-latency communication (ultra-reliable and low latency communications, URLLC), machine type communication (machine type communication, MTC), or the like.

Specifically, when the first indication parameter includes the time sensitivity, the first indication parameter may include at least one of the time sensitivity. When the first indication parameter includes the reliability, the first indication parameter may include at least one of the reliability. When the first indication parameter includes the location, the first indication parameter may include at least one of the location. When the first indication parameter includes the channel path feature, the first indication parameter may include at least one of the channel path feature. The following specifically describes the first indication parameter.

The time sensitivity includes at least one of the following: execution time or response time. Specifically, the first indication parameter may include at least one of the execution time, the response time, or the like. The indication parameter may include at least one of the execution time, the response time, or the like.

The reliability includes at least one of the following: validity, availability, accuracy, integrity, robustness, or scalability. The first indication parameter may include at least one of the validity, the availability, the accuracy, the integrity, the robustness, the scalability, or the like. The indication parameter may include at least one of the validity, the availability, the accuracy, the integrity, the robustness, the scalability, or the like.

The location includes at least one of the following: a location of the first communication apparatus, a location of the second communication apparatus, a distance between the first communication apparatus and the second communication apparatus, a speed of the first communication apparatus, a speed of the second communication apparatus, a relative speed between the first communication apparatus and the second communication apparatus, or the like. The first indication parameter may include at least one of the location of the first communication apparatus, the location of the second communication apparatus, the distance between the first communication apparatus and the second communication apparatus, the speed of the first communication apparatus, the speed of the second communication apparatus, the relative speed between the first communication apparatus and the second communication apparatus, or the like. The indication parameter may include at least one of the location of the first communication apparatus, the location of the second communication apparatus, the distance between the first communication apparatus and the second communication apparatus, the speed of the first communication apparatus, the speed of the second communication apparatus, the relative speed between the first communication apparatus and the second communication apparatus, or the like.

The channel path feature may include at least one of the following: a quantity of paths, a quantity of path clusters, a path angle distribution status, a path cluster angle distribution status, or the like. The first indication parameter may include at least one of the quantity of paths, the quantity of path clusters, the path angle distribution status, the path cluster angle distribution status, or the like. The indication parameter may include at least one of the quantity of paths, the quantity of path clusters, the path angle distribution status, the path cluster angle distribution status, or the like.

A channel eigenvalue in the channel eigenvalue threshold is an eigenvalue of a channel on an antenna port. A signal-to-noise ratio in the signal-to-noise ratio threshold is a signal-to-noise ratio of the channel on the antenna port. The channel on the antenna port may be a channel that is not precoded or beamformed on the antenna port, or may be a channel that is precoded or beamformed on the antenna port.

When the first indication parameter includes the channel eigenvalue threshold, it may be understood that the first indication parameter includes at least one of a channel eigenvalue threshold, a signal power threshold, a signal energy threshold, a reference signal received power (reference signal received power, RSRP) threshold, or the like. When the indication parameters include the channel eigenvalue threshold, it may be understood that the indication parameter includes at least one of the channel eigenvalue threshold, the signal power threshold, the signal energy threshold, the reference signal received power (reference signal received power, RSRP) threshold, or the like.

When the first indication parameter includes the signal-to-noise ratio threshold, it may be understood that the first indication parameter includes at least one of a signal-to-noise ratio (signal-to-noise ratio, SNR) threshold, a signal to interference plus noise ratio (signal to interference & noise ratio, SINR) threshold, or the like. When the indication parameters include the signal-to-noise ratio threshold, it may be understood that the indication parameter includes at least one of the signal-to-noise ratio (signal-to-noise ratio, SNR) threshold, the signal to interference plus noise ratio (signal to interference & noise ratio, SINR) threshold, or the like.

When the first indication parameter includes the quantity of antenna ports, it may be understood that the first indication parameter includes at least one of: a quantity of ports configured for a channel state information reference signal (channel state information reference signal, CSI-RS) resource, a quantity of ports configured for a sounding reference signal (sounding reference signal, SRS) resource, a quantity of ports configured for a demodulation reference signal (demodulation reference signal, DMRS) resource, a quantity of receive antenna ports, a quantity of transmit antenna ports, a maximum quantity of receive antenna ports, a maximum quantity of transmit antenna ports, or the like. When the indication parameters include the quantity of antenna ports, it may be understood that the indication parameter includes at least one of: the quantity of ports configured for the channel state information reference signal (channel state information reference signal, CSI-RS) resource, the quantity of ports configured for the sounding reference signal (sounding reference signal, SRS) resource, the quantity of ports configured for the demodulation reference signal (demodulation reference signal, DMRS) resource, the quantity of receive antenna ports, the quantity of transmit antenna ports, the maximum quantity of receive antenna ports, the maximum quantity of transmit antenna ports, or the like.

When the first indication parameter includes the layer identifier, it may be understood that the first indication parameter includes at least one of a start layer identifier, an end layer identifier, and the like. When the indication parameters include the layer identifier, it may be understood that the indication parameter includes at least one of the start layer identifier, the end layer identifier, or the like. The layer identifier may be any non-negative integer less than or equal to the maximum quantity of supported layers.

When the first indication parameter includes a frequency range, it may be understood that the first indication parameter includes at least one of a spectrum, a frequency band, a frequency channel number, a frequency range, a frequency, or the like. When the indication parameter includes the frequency range, it may be understood that the indication parameter includes at least one of the spectrum, the band, the frequency channel number, the frequency range, the frequency, or the like.

Specifically, when the indication parameter is any one of the transmission latency, the scenario, the channel path feature, the channel latency feature, the modulation scheme, the reliability, the frequency, or the code rate, the following specifically describes candidate values included in the indication parameter. When the indication parameter includes at least two of the transmission latency, the scenario, the channel path feature, the channel latency feature, the modulation scheme, the reliability, the frequency, the code rate, or the like, a candidate value included in the indication parameter is a combination of candidate values included in a plurality of indication parameters. Details are not described below again.

When the indication parameter is the transmission latency, the indication parameters include at least two of ultra-low transmission latency, low transmission latency, high transmission latency, ultra-high transmission latency, and the like. The indication parameter includes at least two of (0, 0.1], (0.1 ms, 3 ms], (3 ms, 30 ms], (30 ms, ∞], or the like.

When the indication parameter is the scenario, the indication parameter includes at least two of outdoor (outdoor), indoor (indoor), an urban microcell (urban microcell, UMi), an urban macrocell (urban macrocell, UMa), a suburban/rural macrocell (rural macrocell, RMa), a street (street), an office (indoor-office), a factory (indoor factory, InF), a vehicle (vehicle), and the like.

When the indication parameter is the channel path feature, the indication parameter includes at least two of a line of sight (line of sight, LOS), a non-line of sight (non-line of sight, NLOS), and the like.

When the indication parameter is the channel latency feature, the indication parameter includes at least two of high latency, medium latency, low latency, ultra-low latency, and the like. For example, the high latency is (1000 ns, □], the medium latency is (100 ns, 1000 ns], the low latency is (10 ns, 100 ns], and the ultra-low latency is (0 ns, 10 ns].

When the indication parameter is the mobility, the indication parameter includes at least two of ultra-low mobility, low mobility, high mobility, ultra-high mobility, and the like. For example, the ultra-low mobility is (0, 10 km/h], the low mobility is (10 km/h, 50 km/h], the high mobility is (50 km/h, 200 km/h], and the ultra-high mobility is (200 km/h, ∞].

When the indication parameter is the modulation scheme, the indication parameter includes at least two of quadrature phase shift keying (quadrature phase shift keying, QPSK), 64 quadrature amplitude modulation (quadrature amplitude modulation, QAM), 256QAM, 1024QAM, or the like.

When the indication parameters include the frequency range (which may also be understood as the spectrum, the frequency band, the frequency channel number, the frequency range, or the frequency), the indication parameter includes at least two of a low frequency, a high frequency, a millimeter wave, terahertz, and the like. Alternatively, the indication parameter includes at least two of 3.5 GHz, 39 GHz, 300 GHz, or the like.

When the indication parameter is the reliability, the indication parameter includes at least two of low reliability, high reliability, ultra-high reliability, and the like. Alternatively, the indication parameter includes at least two of 99.9999999%, 99.99999%, 99.999%, and the like.

When the indication parameter includes the bit rate, the indication parameter includes at least two of an ultra-high bit rate, a high bit rate, a medium bit rate, a low bit rate, an ultra-low bit rate, and the like. Alternatively, the indication parameter includes at least two of (0.8, 0.94], (0.6, 0.8], (0.4, 0.6], (0.2, 0.4], (0, 0.2], or the like.

The foregoing content is merely used as an example for understanding, and not all possibilities are listed in detail in this embodiment of this application. For an indication parameter that is not listed, refer to the foregoing listed content.

For example, when the indication parameter includes the transmission latency, the scenario, the channel path feature, the channel latency feature, the modulation scheme, the reliability, the frequency, the code rate, or the like, the first indication parameter may be a specific value or type of any one of the foregoing parameters. For example, when the indication parameter is the transmission latency, the first indication parameter may be the low transmission latency; when the indication parameter is the scenario, the first indication parameter may be the outdoor; or when the indication parameter is the modulation scheme, the first indication parameter may be the QPSK. Alternatively, the first indication parameter may be a combination of specific values or types of a plurality of parameters in the foregoing parameters. For example, when the indication parameter is the transmission latency and the reliability, the first indication parameter may be the low transmission latency and the ultra-high reliability.

It may be understood that the first indication parameter may be understood as a specific indication parameter in the indication parameters. For example, when the indication parameter is the transmission latency, the indication parameter includes at least two of the ultra-low transmission latency, the low transmission latency, the high transmission latency, the ultra-high transmission latency, and the like, and the first indication parameter may be the low transmission latency. When the indication parameter is the scenario, the indication parameter includes at least two of the outdoor (outdoor), the indoor (indoor), the urban microcell (urban microcell, UMi), the urban macrocell (urban macrocell, UMa), the suburban/rural macro cell (rural macrocell, RMa), the street (street), the office (indoor-office), the factory (indoor factory, InF), the vehicle (vehicle), and the like, and the first indication parameter may be the outdoor. When the indication parameter is the modulation scheme, the indication parameter includes at least two of the quadrature phase shift keying (quadrature phase shift keying, QPSK), the 64 quadrature amplitude modulation (quadrature amplitude modulation, QAM), the 256QAM, the 1024QAM, or the like. When the indication parameter is the modulation scheme, the first indication parameter may be the QPSK. When the indication parameter is the transmission latency and the reliability, the indication parameter includes the low transmission latency and the ultra-high reliability, the high transmission latency and the ultra-high reliability, the low transmission latency and the low reliability, and the high transmission latency and the low reliability, and the first indication parameter may be the low transmission latency and the ultra-high reliability. An example is described herein, and details are not described below.

Different candidate values in indication parameters usually correspond to different codeword-to-layer mapping. In other words, there are different correspondences between the different candidate values in the indication parameters and the codeword-to-layer mapping. The indication parameters include at least two candidate values, and there are at least two correspondences between the indication parameters and the codeword-to-layer mapping, where the correspondences include the correspondence between the first indication parameter and the codeword-to-layer mapping. For example, the candidate values in the indication parameters include {#A, #B}, and the correspondences between the indication parameters and the codeword-to-layer mapping are as follows: An indication parameter #A corresponds to codeword-to-layer mapping #A1, and an indication parameter #B corresponds to codeword-to-layer mapping #B1. The codeword-to-layer mapping #A1 may be at least two columns or at least two rows in Table 2. The codeword-to-layer mapping #B1 may be at least two columns or at least two rows in Table 3. It can be learned from the foregoing correspondences between the indication parameters and the codeword-to-layer mapping and/or the correspondence between the first indication parameter and the codeword-to-layer mapping that the codeword-to-layer mapping of the first indication parameter #A is #A1. A manner in which the first communication apparatus determines the correspondences between the indication parameters and the codeword-to-layer mapping and/or the correspondence between the first indication parameter and the codeword-to-layer mapping is described in S230. Details are not described herein again.

As shown in Table 2 or Table 3, the 1st column is a quantity of layers, the 2nd column is a quantity of codewords, the 3rd column describes codeword-to-layer mapping 1, and the 4th column describes codeword-to-layer mapping 2.

Specifically, the 3rd column describes each codeword-to-layer mapping. The 4th column describes mapping from a complex modulation symbol of each codeword to a complex modulation symbol of a layer. There is a correspondence between the 3rd column and the 4th column, and one column may be deduced based on the other column. For a specific deduction, refer to Table 2 or Table 3.

Table 2 shows the codeword-to-layer mapping #A1 corresponding to the indication parameter #A, and Table 3 shows the codeword-to-layer mapping #B1 corresponding to the indication parameter #B. Table 2 or Table 3 may also be understood as codeword-to-layer mapping corresponding to a quantity n of layers, where $1 \leq n \leq L$. n layers are mapped to $C_n$ codewords, as shown in the 1st column and the 2nd column in the table. Layer identifiers are $[0, 1, \ldots, n-1]$, and codeword identifiers are [0, 1, ..., $C_n$ - 1]. The 3rd column describes mapping from each codeword in the $C_n$ codewords to the layer identifiers. Identifiers of layers to which a codeword q is mapped are $[N^n_{q-1} + 1, ..., N^n_q]$. A quantity of layers to which first q+1 codewords are mapped is $N^n_q + 1$, where $0 \leq N^n_q \leq n - 1$ and $0 \leq q \leq C_n$ - 1. A quantity of the layers to which the codeword q is mapped is $M^n_q = N^n_q - N^n_{q-1}$, where $N^n_{-1} = -1$, $N^n_{C_{n-1}} = n - 1$, and $0 \leq q \leq C_n$ - 1. The 4th column describes mapping from a complex modulation symbol of each codeword in the $C_n$ codewords to a complex modulation symbol of a layer. Complex modulation symbols $d^q(0), ..., d^q(V^q_{symb} - 1)$ of the codeword q are mapped to modulation symbols $x(i) = \left[ x^{N^n_{q-1}+1}(i) \quad ... \quad x^{N^n_q}(i) \right]^{\mathrm{T}}$ of the layer, where $i = 0, 1, ..., V^{layer}_{symb} - 1$, and $V^q_{symb}$ is a total quantity of modulation symbols of the codeword q.

In Table 2, the modulation symbols of the codeword q are evenly and equally mapped to $M^n_q$ layers. Therefore, a quantity of modulation symbols on each layer is $V^{layer}_{symb} = \frac{v^q_{symb}}{M^n_q}$. Specifically, all the modulation symbols of the codeword q are grouped, each group includes $M^n_q$ modulation symbols, $V^{layer}_{symb}$ groups are obtained, and the modulation symbols in each group are separately mapped to the $M^n_q$ layers. In this manner, the modulation symbols in each group are separately mapped to each layer, as shown below:

$$x^{N^n_{q-1}+1}(i) = d^q(M^n_q * i),$$

$$x^{N^n_{q-1}+2}(i) = d^q(M^n_q * i + 1), ...,$$

and

$$x^{N^n_q}(i) = d^q(M^n_q * i + M^n_q - 1),$$

where

$$i = 0, 1, ..., V^{layer}_{symb} - 1$$

It may be understood that, in this embodiment of this application, codeword-to-layer mapping is described by using an example in which the modulation symbols are evenly allocated. Alternatively, in the codeword-to-layer mapping, the modulation symbols may be unevenly allocated. For example, a part of modulation symbols of each codeword are allocated only to a part of layers of the codeword, and another part of the modulation symbols are allocated only to another part of the layers of the codeword. For descriptions of Table 3, refer to the descriptions of Table 2. Details are not described herein again.

A quantity of candidate values of the indication parameters is not limited in this embodiment of this application. In this embodiment of this application, an example in which the quantity of candidate values of the indication parameters is 2 is used to describe the correspondence between the first indication parameter and the codeword-to-layer mapping. For a technical solution in which the quantity of candidate values is greater than 2, refer to this embodiment of this application.

**Table 2 Codeword-to-layer mapping #A1 corresponding to the indication parameter #A**

| Quantity of layers | Quantity of codewords | Codeword-to-layer mapping 1 | Codeword-to-layer mapping 2, where i = $0, 1, ..., V^{layer}_{symb} - 1$ |
|---|---|---|---|
| 1 | 1 | CW$_0$: [0] | $x^0(i) = d^0(i)$ $V^{layer}_{symb} = V^0_{symb}$ |
| ... | ... | ... | ... |

(continued)

| Quantity of layers | Quantity of codewords | Codeword-to-layer mapping 1 | Codeword-to-layer mapping 2, where i = $0, 1, …, V_{symb}^{layer} - 1$ |
|---|---|---|---|
| n | $C_n$ | $CW_0: [0, …, N_0^n]$ <br><br> … <br><br> $CW_q: [N_{q-1}^n + 1, …, N_q^n]$ <br><br> … <br><br> $CW_{C_n-1}: [N_{C_n-2}^n + 1, … , n$ - 1], <br><br> where $0 \le q \le C_n - 1$, <br><br> $0 \le N_q^n \le n - 1$, <br><br> and q = 0,1, … , $C_n - 1$ | $x^0(i) = d^0(M_0^n * i),$ <br><br> $x^1(i) = d^0(M_0^n * i + 1), …,$ <br><br> $x^{N_0^n}(i) = d^0(M_0^n * i + M_0^n - 1)$ <br><br> … <br><br> $x^{N_{q-1}^n+1}(i) = d^q(M_q^n * i),$ <br><br> $x^{N_{q-1}^n+2}(i) = d^q(M_q^n * i + 1), …,$ <br><br> $x^{N_q^n}(i) = d^q(M_q^n * i + M_q^n - 1)$ <br><br> … <br><br> $x^{N_{C_n-2}^n+1}(i) = d^{C_n-1}(M_{C_n-1}^n * i),$ <br><br> $x^{N_{C_n-2}^n+2}(i) = d^{C_n-1}(M_{C_n-1}^n * i + 1), …,$ <br><br> $x^{n-1}(i) = d^{C_n-1}(M_{C_n-1}^n * i + M_{C_n-1}^n - 1)$ <br><br> The quantity of layers of the codeword q is $M_q^n = N_q^n - N_{q-1}^n$, where $N_{-1}^n = -1$ and $N_{C_n-1}^n = n - 1$. The quantity of layers to which the first q+1 codewords are mapped is $N_q^n + 1$. <br><br> $V_{symb}^{layer} = \frac{V_{symb}^0}{M_0^n} = ⋯ = \frac{V_{symb}^q}{M_q^n} ⋯ = \frac{V_{symb}^{C_n-1}}{M_{C_n-1}^n},$ <br><br> where $0 \le q \le C_n$ - 1, $0 \le N_q^n \le n - 1$, and q = 0,1, … , $C_n$ - 1 |
| … | … | … | … |
| L | $C_L$ | $CW_0: [0, …, N_0^L]$ <br><br> … <br><br> $CW_q: [N_{q-1}^L + 1, …, N_q^L]$ <br><br> … | $x^0(i) = d^0(M_0^L * i),$ <br><br> $x^1(i) = d^0(M_0^L * i + 1), …,$ <br><br> $x^{N_0^L}(i) = d^0(M_0^L * i + M_0^L - 1)$ <br><br> $x^{N_{q-1}^L+1}(i) = d^q(M_q^L * i),$ |

(continued)

| Quantity of layers | Quantity of codewords | Codeword-to-layer mapping 1 | Codeword-to-layer mapping 2, where i = $0, 1, \dots, V_{\text{symb}}^{layer} - 1$ |
|---|---|---|---|
| | | $CW_{C_L-1}: [N_{C_L-2}^L + 1, \dots, L-1]$, where $0 \le q \le C_L - 1$, $0 \le N_q^L \le L-1$, and $q = 0, 1, \dots, C_L - 1$ | $x^{N_{q-1}^L+2}(i) = d^q(M_q^L * i + 1), \dots,$ $x^{N_q^L}(i) = d^q(M_q^L * i + M_q^L - 1)$ $x^{N_{C_L-2}^L+1}(i) = d^{C_L-1}(M_{C_{L-1}}^L * i),$ $x^{N_{C_L-2}^L+2}(i) = d^{C_L-1}(M_{C_{L-1}}^L * i + 1), \dots,$ $x^{L-1}(i) = d^{C_L-1}(M_{C_{L-1}}^L * i + M_{C_{L-1}}^L - 1)$ The quantity of layers of the codeword q is $M_q^L = N_q^L - N_{q-1}^L$, where $N_{-1}^L = -1$ and $N_{C_L-1}^L = L-1$. The quantity of layers to which the first q+1 codewords are mapped is $N_q^L + 1$. $V_{symb}^{layer} = \frac{V_{symb}^0}{M_0^L} = \dots = \frac{V_{symb}^q}{M_q^L} = \dots = \frac{V_{symb}^{C_L-1}}{M_{C_{L-1}}^L},$ where $0 \le q \le C_L - 1$, $0 \le N_q^L \le L-1$, and $q = 0, 1, \dots, C_L - 1$ |

**Table 3 Codeword-to-layer mapping #B1 corresponding to the indication parameter #B**

| Quantity of layers | Quantity of codewords | Codeword-to-layer mapping 1 | Codeword-to-layer mapping 2, where i = $0, 1, \dots, V_{\text{symb}}^{layer} - 1$ |
|---|---|---|---|
| 1 | 1 | $CW_0: [0]$ | $x^0(i) = d^{0'}(i)$ $V_{\text{symb}}^{layer} = V_{symb}^{0'}$ |
| ... | ... | ... | ... |
| n' | | $CW_0: [0, \dots, N_0^{n''}]$ ... $CW_{q'}: [N_{q'-1}^{n''} + 1, \dots, N_{q'}^{n''}]$ ... $CW_{C_{n'}-1}': [N_{C_{n'}-2}^{n'} + 1, \dots, n'-1]$, | $x^0(i) = d^0(M_0^{n''} * i),$ $x^1(i) = d^0(M_0^{n''} * i + 1), \dots,$ $x^{N_0^{n''}}(i) = d^0(M_0^{n''} * i + M_0^{n''} - 1)$ ... $x^{N_{q'-1}^{l'}+1}(i) = d^{q'}(M_{q'}^{n''} * i), \dots,$ $x^{N_{q'-1}^{n'}+2}(i) = d^{q'}(M_{q'}^{n''} * i + 1), \dots,$ |

(continued)

| Quantity of layers | Quantity of codewords | Codeword-to-layer mapping 1 | Codeword-to-layer mapping 2, where i = $0, 1, …, V_{symb}^{layer} - 1$ |
|---|---|---|---|
| | | where $0 \le q' \le C_{n'}' - 1$, $0 \le N_{q'}^{n''} \le \le n' - 1$, and q' = $0, 1, …, C_{n'}' - 1$ | $x_{q'}^{N_{q'}^{n''}}(i) = d^{q'}\left(M_{q'}^{n''} * i + M_{q'}^{n''} - 1\right)$ ... $x_{C_{n'-2}'+1}^{N_{C_{n'-2}}^{n'}}(i) = d^{C_{n'-1}'}\left(M_{C_{n'-1}'}^{n'} * i\right),$ $x_{C_{n'-2}'+2}^{N}(i) = d^{C_{n'-1}'}\left(M_{C_{n'-1}'}^{n'} * i + 1\right), …,$ $x^{n'-1'}(i) = d^{C_{n'-1}'}\left(M_{C_{n'-1}'}^{n'} * i + M_{C_{n-1}'}^{n'} - 1\right)$ A quantity of layers of a codeword q' is $M_{q'}^{n''} = N_{q'}^{n''} - N_{q'-1}^{n'}$ , where $N_{-1}^{n''} = -1$ and $N_{C_{n'}-1}^{n'} = n' - 1$ . A quantity of layers to which first q' + 1 codewords are mapped is $N_{q'}^{n'} + 1$ . $V_{symb}^{layer'} = \frac{V_{symb}^{0'}}{M_0^{n''}} = … = \frac{V_{symb}^{q''}}{M_{q'}^{n''}} = … = \frac{V_{symb}^{C_{n'-1}'}}{M_{C_{n'-1}}^{n'}},$ where $0 \le q \le C_{n'}' - 1$, $0 \le N_{q'}^{n''} \le n' - 1$, and q' = $0, 1, …, C_{n'}' - 1$ |
| ... | ... | ... | ... |
| L' | | $CW_0: [0, …, N_0^{L''}]$ $\vdots$ $CW_{q'}: [N_{q'-1}^{L'} + 1, …, N_{q'}^{L''}]$ $\vdots$ $CW_{C_{L'-1}'}: [N_{C_{L'-2}}^{L'} + 1, …, L' - 1],$ where $0 < q' \le$ | $x^0(i) = d^0\left(M_0^{L''} * i\right),$ $x^1(i) = d^0\left(M_0^{L''} * i + 1\right), …,$ $x^{N_0^{L''}}(i) = d^0\left(M_0^{L''} * i + M_0^{L''} - 1\right)$ ... $x^{N_{q'-1}^{L'}+1}(i) = d^{q'}\left(M_{q'}^{L''} * i\right),$ $x^{N_{q'-1}^{L'}+2}(i) = d^{q'}\left(M_{q'}^{L''} * i + 1\right), …,$ $x^{N_{q'}^{L''}}(i) = d^{q'}\left(M_{q'}^{L''} * i + M_{q'}^{L''} - 1\right)$ |

18

(continued)

| Quantity of layers | Quantity of codewords | Codeword-to-layer mapping 1 | Codeword-to-layer mapping 2, where i = $0, 1, ..., V^{layer}_{symb} - 1$ |
|---|---|---|---|
|  |  | $C'_{L'} - 1$, $0 \le N^{L''}_{q'} \le$ L' - 1, and q' = $0, 1, ..., C'_{L'} - 1$ | ... $$x^{N^{L'}_{C'_{L'-2}} + 1}(i) = d^{C'_{L'-1}}\left(M^{L'}_{C'_{L'-1}} * i\right),$$ $$x^{N^{L'}_{C'_{L'-2}} + 2}(i) = d^{C'_{L'-1}}\left(M^{L'}_{C'_{L'-1}} * i + 1\right), ...,$$ $$x^{L'-1}(i) = d^{C'_{L'-1}}\left(M^{L'}_{C'_{L'-1}} * i + M^{L'}_{C'_{L'-1}} - 1\right),$$ The quantity of layers of the codeword q' is $M^{L''}_{q'} =$ $= N^{L''}_{q'} - N^{L'}_{q'-1}$, where $N^{L''}_{-1} = -1$ and $N^{L'}_{C'_{L'-1}} = L' - 1$. The quantity of layers to which the first q' + 1 codewords are mapped is $N^{L''}_{q'} + 1$. $$V^{layer}_{symb} = \frac{V^{0}_{symb}}{M^{L''}_{0}} = \cdots = \frac{V^{q'}_{symb}}{M^{L''}_{q'}} = \cdots = \frac{V^{C'_{L'-1}}_{symb}}{M^{L'}_{C'_{L'-1}}},$$ where $0 \le q' \le C'_{L'} - 1$, $0 \le N^{L''}_{q'} \le L' - 1$, and q' = $0, 1, ..., C'_{L'} - 1$ |

For example, different channel eigenvalue thresholds correspond to different codeword-to-layer mapping. For example, a channel eigenvalue threshold (dB) (which may be understood as an indication parameter) includes at least two candidate values in {5, 10, 15, 20, ...}. The channel eigenvalue threshold (dB) 5 (which may be understood as a first indication parameter) corresponds to the codeword-to-layer mapping #A1, the channel eigenvalue threshold (dB) 10 corresponds to the codeword-to-layer mapping #B1, and the like. The channel eigenvalue threshold may be understood as one of a channel eigenvalue threshold, a signal power threshold, a signal energy threshold, a reference signal received power threshold, or the like.

For example, different signal-to-noise ratio thresholds correspond to different codeword-to-layer mapping. For example, a signal-to-noise ratio threshold (dB) (which may be understood as an indication parameter) includes at least two candidate values in {5, 10, 15, 20, ...}. The signal-to-noise ratio threshold (dB) 5 (which may be understood as a first indication parameter) corresponds to the codeword-to-layer mapping #A1, the signal-to-noise ratio threshold (dB) 10 corresponds to the codeword-to-layer mapping #B1, and the like. The signal-to-noise ratio threshold may be understood as one of a signal-to-noise ratio threshold, a signal to interference plus noise ratio threshold, or the like.

For example, different quantities of antenna ports correspond to different codeword-to-layer mapping. For example, a quantity of antenna ports (which may be understood as an indication parameter) includes at least two candidate values in {4, 8, 16, 32, 64, 128, 256, 512, 1024, ...}. When the quantity of antenna ports is 64 (which may be understood as a first indication parameter), the quantity corresponds to the codeword-to-layer mapping #A1; when the quantity of antenna ports is 1024, the quantity corresponds to the codeword-to-layer mapping #B1; and the like. The quantity of antenna ports may be understood as one of: a quantity of ports configured for a channel state information reference signal (channel state information reference signal, CSI-RS) resource, a quantity of ports configured for a sounding reference signal (sounding reference signal, SRS) resource, a quantity of ports configured for a demodulation reference signal (demodulation reference signal, DMRS) resource, a quantity of receive antenna ports, a quantity of transmit antenna ports, a maximum quantity of receive antenna ports, a maximum quantity of transmit antenna ports, or the like.

Table 4 shows an example of the codeword-to-layer mapping #A1 corresponding to the quantity of antenna ports being 64, and Table 5 shows an example of the codeword-to-layer mapping #B1 corresponding to the quantity of antenna ports bing 1024.

**Table 4 Codeword-to-layer mapping #A1 corresponding to the quantity (64) of antenna ports**

| Quantity of layers $1, ..., V_{symb}^{layer}-1$ | Quantity of codewords | Codeword-to-layer mapping 1 | Codeword-to-layer mapping 2, where i=0, |
|---|---|---|---|
| 1 | 1 | CW$_0$: [0] | $x^0(i)=d^0(i)$<br><br>$$V_{symb}^{layer}=V_{symb}^0$$ |
| 2 | 1 | CW$_0$: [0, 1] | $x^0(i)=d^0(2*i)$<br>$x^1(i)=d^0(2*i+1)$<br><br>$$V_{symb}^{layer}=V_{symb}^0/2$$ |
| 3 | 1 | CW$_0$: [0, 1, 2] | $x^0(i)=d^0(3*i)$<br>$x^1(i)=d^0(3*i+1)$<br>$x^2(i)=d^0(3*i+2)$<br><br>$$V_{symb}^{layer}=V_{symb}^0/3$$ |
| 4 | 1 | CW$_0$: [0, 1, 2, 3] | $x^0(i)=d^0(4*i)$<br>$x^1(i)=d^0(4*i+1)$<br>$x^2(i)=d^0(4*i+2)$<br>$x^3(i)=d^0(4*i+3)$<br><br>$$V_{symb}^{layer}=V_{symb}^0/4$$ |
| 5 | 2 | CW$_0$: [0, 1, 2, 3]; and CW$_1$: [4] | $x^0(i)=d^0(4*i)$<br>$x^1(i)=d^0(4*i+1)$<br>$x^2(i)=d^0(4*i+2)$<br>$x^3(i)=d^0(4*i+3)$<br>$x^4(i)=d^1(i)$<br><br>$$V_{symb}^{layer}=V_{symb}^0/4=V_{symb}^1$$ |
| 6 | 2 | CW$_0$: [0, 1, 2, 3]; and CW$_1$: [4, 5] | $x^0(i)=d^0(4*i)$<br>$x^1(i)=d^0(4*i+1)$<br>$x^2(i)=d^0(4*i+2)$<br>$x^3(i)=d^0(4*i+3)$<br>$x^4(i)=d^1(2*i)$<br>$x^5(i)=d^1(2*i+1)$<br><br>$$V_{symb}^{layer}=V_{symb}^0/4=V_{symb}^1/2$$ |
| 7 | 3 | CW$_0$: [0, 1, 2, 3];<br>CW$_1$: [4, 5]; and<br>CW$_2$: [6] | $x^0(i)=d^0(4*i)$<br>$x^1(i)=d^0(4*i+1)$<br>$x^2(i)=d^0(4*i+2)$<br>$x^3(i)=d^0(4*i+3)$<br>$x^4(i)=d^1(2*i)$<br>$x^5(i)=d^1(2*i+1)$<br>$x^6(i)=d^2(i)$<br><br>$$V_{symb}^{layer}=V_{symb}^0/4=V_{symb}^1/2=V_{symb}^2$$ |

(continued)

| Quantity of layers $1, ..., V^{layer}_{symb}-1$ | Quantity of codewords | Codeword-to-layer mapping 1 | Codeword-to-layer mapping 2, where i=0, |
|---|---|---|---|
| 8 | 3 | CW$_0$: [0, 1, 2, 3]; CW$_1$: [4, 5]; and CW$_2$: [6, 7] | $x^0(i)=d^0(4*i)$ <br> $x^1(i)=d^0(4*i+1)$ <br> $x^2(i)=d^0(4*i+2)$ <br> $x^3(i)=d^0(4*i+3)$ <br> $x^4(i)=d^1(2*i)$ <br> $x^5(i)=d^1(2*i+1)$ <br> $x^6(i)=d^2(2*i)$ <br> $x^7(i)=d^2(2*i+1)$ <br> $V^{layer}_{symb}=V^0_{symb}/4=V^1_{symb}/2=V^2_{symb}/2$ |

**Table 5 Codeword-to-layer mapping #B1 corresponding to the quantity (1024) of antenna ports**

| Quantity of layers | Quantity of codewords | Codeword-to-layer mapping 1 | Codeword-to-layer mapping 2, where i=0, 1, ..., $V^{layer}_{symb}-1$ |
|---|---|---|---|
| 1 | 1 | CW$_0$: [0] | $x^0(i)=d^0(i)$ <br> $V^{layer}_{symb}=V^0_{symb}$ |
| 2 | 1 | CW$_0$: [0, 1] | $x^0(i)=d^0(2*i)$ <br> $x^1(i)=d^0(2*i+1)$ <br> $V^{layer}_{symb}=V^0_{symb}/2$ |
| 3 | 1 | CW$_0$: [0, 1, 2] | $x^0(i)=d^0(3*i)$ <br> $x^1(i)=d^0(3*i+1)$ <br> $x^2(i)=d^0(3*i+2)$ <br> $V^{layer}_{symb}=V^0_{symb}/3$ |
| 4 | 1 | CW$_0$: [0, 1, 2, 3] | $x^0(i)=d^0(4*i)$ <br> $x^1(i)=d^0(4*i+1)$ <br> $x^2(i)=d^0(4*i+2)$ <br> $x^3(i)=d^0(4*i+3)$ <br> $V^{layer}_{symb}=V^0_{symb}/4$ |
| 5 | 1 | CW$_0$: [0, 1, 2, 3, 4] | $x^0(i)=d^0(5*i)$ <br> $x^1(i)=d^0(5*i+1)$ <br> $x^2(i)=d^0(5*i+2)$ <br> $x^3(i)=d^0(5*i+3)$ <br> $x^4(i)=d^0(5*i+4)$ <br> $V^{layer}_{symb}=V^0_{symb}/5$ |

(continued)

| Quantity of layers | Quantity of codewords | Codeword-to-layer mapping 1 | Codeword-to-layer mapping 2, where $i=0, 1, ..., V^{layer}_{symb}-1$ |
|---|---|---|---|
| 6 | 1 | $CW_0$: [0, 1, 2, 3, 4, 5] | $x^0(i)=d^0(6*i)$ <br> $x^1(i)=d^0(6*i+1)$ <br> $x^2(i)=d^0(6*i+2)$ <br> $x^3(i)=d^0(6*i+3)$ <br> $x^4(i)=d^0(6*i+4)$ <br> $x^5(i)=d^0(6*i+5)$ <br><br> $$V^{layer}_{symb}=V^0_{symb}/6$$ |
| 7 | 2 | $CW_0$: [0, 1, 2, 3, 4, 5]; and $CW_1$: [6] | $x^0(i)=d^0(6*i)$ <br> $x^1(i)=d^0(6*i+1)$ <br> $x^2(i)=d^0(6*i+2)$ <br> $x^3(i)=d^0(6*i+3)$ <br> $x^4(i)=d^0(6*i+4)$ <br> $x^5(i)=d^0(6*i+5)$ <br> $x^6(i)=d^1(i)$ <br><br> $$V^{layer}_{symb}=V^0_{symb}/6=V^1_{symb}/2$$ |
| 8 | 2 | $CW_0$: [0, 1, 2, 3, 4, 5]; and $CW_1$: [6, 7] | $x^0(i)=d^0(6*i)$ <br><br> $x^1(i)=d^0(6*i+1)$ <br> $x^2(i)=d^0(6*i+2)$ <br> $x^3(i)=d^0(6*i+3)$ <br> $x^4(i)=d^0(6*i+4)$ <br> $x^5(i)=d^0(6*i+5)$ <br> $x^6(i)=d^1(2*i)$ <br> $x^7(i)=d^1(2*i+1)$ <br><br> $$V^{layer}_{symb}=V^0_{symb}/6=V^1_{symb}/2$$ |

It may be understood that Table 4 and Table 5 are schematic tables of codeword-to-layer mapping corresponding to an indication parameter being a quantity of antenna ports. For codeword-to-layer mapping corresponding to another indication parameter such as a scenario, a location, or a distance, refer to content shown in Table 4 or Table 5. Details are not described below again.

For example, different scenarios correspond to different codeword-to-layer mapping. For example, a scenario (which may be understood as an indication parameter) includes at least two candidate values in {outdoor, indoor, urban microcell, urban macrocell, suburban/rural macrocell, street, office, factory, vehicle, ...}. When the scenario is the urban microcell (which may be understood as a first indication parameter), the scenario corresponds to the codeword-to-layer mapping #A1; when the scenario is the urban macrocell, the scenario corresponds to the codeword-to-layer mapping #B1, when the scenario is the suburban/rural macrocell, the scenario corresponds to codeword-to-layer mapping #C1; and the like.

For example, different distances between the first communication apparatus and the second communication apparatus correspond to different codeword-to-layer mapping. For example, a distance between the first communication apparatus and the second communication apparatus (which may be understood as an indication parameter) includes at least two candidate values in {150 m, 300 m, 500 m, 1000 m, ...}. When the distance between the first communication apparatus and the second communication apparatus is 150 m (which may be understood as a first indication parameter), the distance corresponds to the codeword-to-layer mapping #A1; when the distance between the first communication apparatus and the second communication apparatus is 300 m, the distance corresponds to the codeword-to-layer mapping #B1, and the like.

For example, different channel path features correspond to different codeword-to-layer mapping. For example, a channel path feature (which may be understood as an indication parameter) includes at least two candidate values in {line of sight, non-line of sight, ...}. The channel path feature LOS (which may be understood as a first indication parameter) corresponds to the codeword-to-layer mapping #A1, the channel path feature NLOS corresponds to the codeword-to-layer mapping #B1, and the like.

For example, different channel latency features correspond to different codeword-to-layer mapping. For example, a channel latency feature (which may be understood as an indication parameter) includes at least two candidate values in {high latency, medium latency, low latency, ultra-low latency, ...}. The high latency (ns), the medium latency (ns), the low latency (ns), and the ultra-low latency (ns) may also be described as (1000, □], (100, 1000), (10, 100], and (0, 10].

Specifically, when the channel latency feature is the ultra-low latency (which may be understood as a first indication parameter), the channel latency feature corresponds to the codeword-to-layer mapping #A1; when the channel latency feature is the low latency, the channel latency feature corresponds to the codeword-to-layer mapping #B1; when the channel latency feature is the medium latency, the channel latency feature corresponds to the codeword-to-layer mapping #C1; when the channel latency feature is the high latency, the channel latency feature corresponds to codeword-to-layer mapping #D1; and the like. Alternatively, when the channel latency feature (ns) is (0, 10], the channel latency feature corresponds to the codeword-to-layer mapping #A1; when the channel latency feature (ns) is (10, 100], the channel latency feature corresponds to the codeword-to-layer mapping #B1; when the channel latency feature (ns) is (100, 1000], the channel latency feature corresponds to the codeword-to-layer mapping #C1; when the channel latency feature (ns) is (1000, □], the channel latency feature corresponds to the codeword-to-layer mapping #D1; and the like.

For example, different spectrums correspond to different codeword-to-layer mapping. For example, a spectrum (which may be understood as an indication parameter) includes at least two candidate values in {low frequency, high frequency, millimeter wave, terahertz, or the like}. The low frequency (GHz), the high frequency (GHz), the millimeter wave (GHz), the terahertz (GHz), or the like may also be described as 3.5, 39, 300, 1000.

Specifically, when the spectrum is the low frequency (which may be understood as a first indication parameter), the spectrum corresponds to the codeword-to-layer mapping #A1; when the spectrum is the millimeter wave, the spectrum corresponds to the codeword-to-layer mapping #B1; when the spectrum is the terahertz, the spectrum corresponds to the codeword-to-layer mapping #C1; and the like. Alternatively, when the spectrum (GHz) is 3.5, the spectrum corresponds to the codeword-to-layer mapping #A1; when the spectrum (GHz) is 300, the spectrum corresponds to the codeword-to-layer mapping #B1; when the spectrum (GHz) is 1000, the spectrum corresponds to the codeword-to-layer mapping #C1; and the like.

For example, different service types correspond to different codeword-to-layer mapping. For example, a service type (which may be understood as an indication parameter) includes at least two candidate values in {eMBB, URLLC, MTC, ...}. The eMBB (which may be understood as a first indication parameter) corresponds to the codeword-to-layer mapping #A1, the URLLC corresponds to the codeword-to-layer mapping #B1, the MTC corresponds to the codeword-to-layer mapping #C1, and the like.

For example, different modulation schemes correspond to different codeword-to-layer mapping. For example, a modulation scheme (which may be understood as an indication parameter) includes at least two candidate values in {QPSK, 64QAM, 256QAM, 1024QAM, ...}. For example, the QPSK (which may be understood as a first indication parameter) corresponds to the codeword-to-layer mapping #A1, the 64QAM corresponds to the codeword-to-layer mapping #B1, the 256QAM corresponds to the codeword-to-layer mapping #C1, the 1024QAM corresponds to the codeword-to-layer mapping #D1, and the like.

For example, different bit rates correspond to different codeword-to-layer mapping. For example, a bit rate (which may be understood as an indication parameter) includes at least two candidate values in {ultra-high bit rate, high bit rate, medium bit rate, low bit rate, ultra-low bit rate, ...}. The ultra-high bit rate, the high bit rate, the medium bit rate, the low bit rate, the ultra-low bit rate, or the like may also be described as (0.8, 0.94], (0.6, 0.8], (0.4, 0.6], (0.2, 0.4], and (0, 0.2]. For example, the ultra-high code rate (which may be understood as a first indication parameter) corresponds to the codeword-to-layer mapping #A1, the high code rate corresponds to a codeword-to-layer mapping #B1, the medium code rate corresponds to the codeword-to-layer mapping #C1, the low code rate corresponds to the codeword-to-layer mapping #D1, the ultra-low bit rate corresponds to codeword-to-layer mapping #E1, and the like. Alternatively, (0.8, 0.94] corresponds to the codeword-to-layer mapping #A1, (0.6, 0.8] corresponds to the codeword-to-layer mapping #B1, (0.4, 0.6] corresponds to the codeword-to-layer mapping #C1, (0.2, 0.4] corresponds to the codeword-to-layer mapping #D1, (0, 0.2] corresponds to the codeword-to-layer mapping #E1, and the like.

For example, different reliability service types correspond to different codeword-to-layer mapping. For example, reliability (which may be understood as an indication parameter) includes at least two candidate values in {ultra-high reliability, high reliability, medium reliability, low reliability, ultra-low reliability, ...}. The ultra-high reliability, the high reliability, the low reliability, or the like may also be described as 99.9999999%, 99.99999%, and 99.999%. For example, 99.9999999% (which may be understood as a first indication parameter) corresponds to the codeword-to-layer mapping #A1, 99.99999% corresponds to the codeword-to-layer mapping #B1, 99.999% corresponds to the codeword-to-layer mapping #C1, and the like. The ultra-high reliability corresponds to the codeword-to-layer mapping #A1, the high reliability corresponds to the codeword-to-layer mapping #B1, the low reliability corresponds to the codeword-to-layer mapping #C1, and the like.

For example, different maximum quantities of supported codewords correspond to different codeword-to-layer mapping. For example, a maximum quantity of supported codewords (which may be understood as an indication parameter) includes at least two candidate values in {2, 4, 6, 8, ...}. When the maximum quantity of supported codewords is 2 (which may be understood as a first indication parameter), the quantity corresponds to the codeword-to-layer mapping relationship #A1; when the maximum quantity of supported codewords is 8, the quantity corresponds to the codeword-to-layer mapping relationship #B1; and the like.

For example, different maximum quantities of supported layers correspond to different codeword-to-layer mapping. For example, a maximum quantity of supported layers (which may be understood as an indication parameter) includes at least two candidate values in {4, 8, 16, 32, ...}. When the maximum quantity of supported layers is 4 (which may be understood as a first indication parameter), the quantity corresponds to the codeword-to-layer mapping relationship #A1; when the maximum quantity of supported codewords is 32, the quantity corresponds to the codeword-to-layer mapping relationship #B1; and the like.

For example, whether dynamic codeword-to-layer mapping is supported (which may be understood as an indication parameter) corresponds to different codeword-to-layer mapping. For example, that the dynamic codeword-to-layer mapping is supported (which may be understood as a first indication parameter) corresponds to the codeword-to-layer mapping relationship #A1; and that the dynamic codeword-to-layer mapping is not supported corresponds to the codeword-to-layer mapping relationship #B1.

For example, different layer identifiers correspond to different codeword-to-layer mapping. For example, a layer identifier (which may be understood as an indication parameter) includes at least two candidate values in {1, 2, 3, 4, ...}. The layer identifier being 1 (which may be understood as a first indication parameter) corresponds to the codeword-to-layer mapping relationship #A1. The layer identifier being 4 corresponds to the codeword-to-layer mapping relationship #B1. The layer identifier may be understood as one of a start layer identifier, an end layer identifier, and the like.

For example, different mobility corresponds to different codeword-to-layer mapping. For example, mobility (which may be understood as an indication parameter) includes at least two candidate values in {ultra-low mobility, low mobility, high mobility, ultra-high mobility, ...}. The ultra-low mobility (km/h), the low mobility (km/h), and the high mobility (km/h) may be described as (0, 10], (10, 50], (50, 200], and (200, ∞]. For example, the ultra-low mobility (which may be understood as a first indication parameter) corresponds to the codeword-to-layer mapping relationship #A1, the low mobility corresponds to the codeword-to-layer mapping relationship #B1, the high mobility corresponds to the codeword-to-layer mapping relationship #C1, the ultra-high mobility corresponds to the codeword-to-layer mapping relationship #D1, and the like. For another example, (0, 10] corresponds to a codeword-to-layer mapping relationship #A2, (10, 50] corresponds to a codeword-to-layer mapping relationship #B2, (50, 200] corresponds to a codeword-to-layer mapping relationship #C2, (200, ∞] corresponds to a codeword-to-layer mapping relationship #D2, and the like.

For example, different transmission latency corresponds to different codeword-to-layer mapping. For example, transmission latency (which may be understood as an indication parameter) includes at least two candidate values in {ultra-high transmission latency, high transmission latency, low transmission latency, ultra-low transmission latency, ...}. The ultra-high transmission latency (ms), the high transmission latency (ms), the low transmission latency (ms), and the ultra-low transmission latency (ms) may be described as (0, 0.1], (0.1, 3], (3, 30], and (30, ∞]. For example, the ultra-high transmission latency (which may be understood as a first indication parameter) corresponds to the codeword-to-layer mapping relationship #A1, the high transmission latency corresponds to the codeword-to-layer mapping relationship #B1, the low transmission latency corresponds to the codeword-to-layer mapping relationship #C1, the ultra-low transmission latency corresponds to the codeword-to-layer mapping relationship #D1, and the like. For another example, the transmission latency being (0, 0.1] corresponds to the codeword-to-layer mapping relationship #A2, the transmission latency being (0.1, 3] corresponds to the codeword-to-layer mapping relationship #B2, the transmission latency being (3, 30] corresponds to the codeword-to-layer mapping relationship #C2, the transmission latency being (30, ∞] corresponds to the codeword-to-layer mapping relationship #D2, and the like.

In a possible implementation, the first indication parameter may be one parameter, or may be at least two parameters. The indication parameter may be one parameter, or may be at least two parameters.

For example, different combinations of channel eigenvalue thresholds and layer identifiers correspond to different codeword-to-layer mapping. For example, a combination of a channel eigenvalue threshold and a layer identifier (which may be understood as an indication parameter) includes at least two candidate values in {channel eigenvalue threshold (dB) 10 and layer identifier 1, channel eigenvalue threshold (dB) 10 and layer identifier 9, ...}. The channel eigenvalue threshold (dB) 10 and the layer identifier 1 (which may be understood as a first indication parameter) correspond to the codeword-to-layer mapping #A1, the channel eigenvalue threshold (dB) 10 and the layer identifier 9 correspond to the codeword-to-layer mapping #B1, and the like.

For example, different combinations of signal-to-noise ratio thresholds and layer identifiers correspond to different codeword-to-layer mapping. For example, a combination of a signal-to-noise ratio threshold and a layer identifier (which may be understood as an indication parameter) includes at least two candidate values in {signal-to-noise ratio threshold (dB) 10 and layer identifier 1, signal-to-noise ratio threshold (dB) 10 and layer identifier 9, ...}. The signal-to-noise ratio threshold (dB) 10 and the layer identifier 1 (which may be understood as a first indication parameter) correspond to the codeword-to-layer mapping #A1, the signal-to-noise ratio threshold (dB) 10 and the layer identifier 9 correspond to the codeword-to-layer mapping #B 1, and the like.

In the foregoing listed codeword-to-layer mapping, a quantity of codewords, a quantity of layers, and a quantity of candidate values in the indication parameters are not limited in this embodiment of this application.

The foregoing content is merely used as an example for understanding, and not all possibilities are listed in detail in this embodiment of this application. For another manner that is not listed, refer to the foregoing listed content.

The second communication apparatus establishes a correspondence between any one or more of the foregoing indication parameters and the codeword-to-layer mapping, where the indication parameters include at least two candidate values. The first indication parameter determined by the second communication apparatus is selected from a plurality of candidate values such as {#Y, #Z, ...} in the indication parameters. In this way, the second communication apparatus can flexibly and dynamically adjust or indicate the codeword-to-layer mapping based on the first indication parameter.

S220: The second communication apparatus sends the first indication parameter to the first communication apparatus.

Correspondingly, the first communication apparatus receives the first indication parameter sent by the second communication apparatus.

Specifically, the second communication apparatus may send the first indication parameter to the first communication apparatus through higher layer signaling or physical layer signaling. For ease of differentiation and description, an example in which the first indication parameter sent by the second communication apparatus to the first communication apparatus is a first indication parameter #A is used for description in this embodiment of this application.

For example, the second communication apparatus may send the first indication parameter to the first communication apparatus in at least one of data transmission, CSI feedback, and coding/decoding, or may send the first indication parameter to the first communication apparatus in another communication procedure. This is not limited in this embodiment of this application. The data transmission may include data receiving and/or data sending.

In this embodiment of this application, the higher layer signaling may include radio resource control (radio resource control, RRC) signaling, media access control (media access control, MAC) signaling, other higher layer signaling, or the like. The physical layer signaling may include downlink control information (downlink control information, DCI) signaling or other physical layer signaling, for example, uplink control information (uplink control information, UCI).

In a possible implementation, indication information corresponding to the first indication parameter may be user-level indication information, user group-level indication information, or cell-level indication information.

Specifically, the user-level indication information means that the first indication parameter sent by the second communication apparatus to the first communication apparatus is applicable only to the first communication apparatus, and is not applicable to another first communication apparatus. The user group-level indication information means that the first indication parameter sent by the second communication apparatus to the first communication apparatus is not only applicable to the first communication apparatus, but also applicable to another first communication apparatus. The cell-level indication information means that the first indication parameter sent by the second communication apparatus to the first communication apparatus is not only applicable to the first communication apparatus, but also applicable to all other first communication apparatuses that are located in a same cell as the first communication apparatus.

In a possible implementation, the second communication apparatus configures, in semi-static RRC signaling, a plurality of candidate values of the indication parameters, or the plurality of candidate values of the indication parameters are predefined. The second communication apparatus indicates, by using a bit field of dynamic DCI signaling, one of the plurality of candidate values configured or predefined in the RRC signaling, for example, the first indication parameter. A quantity of bits used for indication in the DCI signaling may be determined based on a quantity of the candidate values configured in the RRC signaling. For example, the indication parameters include two candidate values: #A and #B. In this embodiment of this application, a bit"1" indicates #A, and a bit "0" indicates #B. Therefore, in this embodiment of this application, 1 bit of the DCI signaling may indicate the first indication parameter. The first communication apparatus may determine, based on the bit field of the DCI, the first indication parameter sent by the second communication apparatus to the first communication apparatus. The first communication apparatus determines, based on the first indication parameter, codeword-to-layer mapping of data scheduled by using the DCI. In this embodiment of this application, dynamic DCI signaling is used. In this way, the codeword-to-layer mapping can be dynamically and flexibly adjusted in real time, and better communication performance can be achieved when the first indication parameter changes quickly.

In a possible implementation, the second communication apparatus may configure, in RRC signaling, whether DCI includes a bit field indicating the first indication parameter, and the first communication apparatus determines, based on the indication field, whether the DCI includes the first indication parameter. Alternatively, the second communication apparatus may not configure the indication field in the RRC signaling, and the first communication apparatus determines, by blindly detecting the DCI, whether the DCI includes the first indication parameter.

In a possible implementation, the second communication apparatus configures, in semi-static RRC signaling, a plurality of candidate values of the indication parameters, or the plurality of candidate values of the indication parameters are predefined. The second communication apparatus indicates, through the semi-static RRC signaling, one of the plurality of candidate values, for example, the first indication parameter. The first communication apparatus determines the codeword-to-layer mapping based on the first indication parameter. In this embodiment of this application, the codeword-to-layer mapping may be semi-statically adjusted by using the semi-static RRC signaling. This is applicable to a scenario in which the first indication parameter changes slowly, and this can reduce signaling overheads.

In a possible implementation, DCI signaling sent by the second communication apparatus to the first communication apparatus may be group DCI, and the group DCI includes a plurality of information blocks. One information block corresponds to one first communication apparatus. One first indication parameter may be indicated by one or more bits. An information block of a first communication apparatus includes at least one bit, indicating the first indication parameter. A quantity of bits of DCI included in the information block may be determined based on a quantity of candidate items in the indication parameters. The second communication apparatus may configure, for each first communication apparatus in RRC signaling, a specific location of an information block corresponding to the first communication apparatus in the group DCI. The group DCI may jointly send control information of a group of users. This can reduce control signaling overheads, and can also reduce control channel resource overheads.

In a possible implementation, the first indication parameter is applicable to a plurality of first communication apparatuses. In other words, the plurality of first communication apparatuses may share the first indication parameter. A first communication apparatus may configure a group number for a user group in RRC signaling. One group number corresponds to one user group, and one user group includes a plurality of first communication apparatuses. One user group corresponds to one first indication parameter, one user group corresponds to one DCI information block, and a location of the information block in DCI is configured in the RRC signaling. The information block includes at least one bit, indicating the first indication parameter. A quantity of bits of DCI included in the information block may be determined based on a quantity of candidate items in the indication parameters. The first communication device determines the location of the corresponding information block in the RRC signaling based on the group number of the first communication device, and obtains the first indication parameter. Compared with the user-level indication, this implementation can significantly reduce signaling overheads.

In a possible implementation, the first indication parameter is applicable to all first communication apparatuses in a cell. The second communication apparatus broadcasts the first indication parameter to all the first communication apparatuses in the cell. For example, the second communication apparatus indicates the first indication parameter in a physical broadcast channel (physical broadcast channel, PBCH), a system information block (system information block, SIB), or common RRC signaling. Compared with the user-level indication or the user group-level indication, this implementation can significantly reduce signaling overheads.

In a possible implementation, when the indication parameters include a scenario, the second communication apparatus senses a change of the scenario in advance. To achieve service unawareness of the first communication apparatus, the second communication apparatus may indicate the scenario and an effective moment (which is a moment at which codeword-to-layer mapping corresponding to the scenario takes effect) to the first communication apparatus in advance.

In a possible implementation, when sensing a change of a scenario, the first communication apparatus may feed back scenario information to the second communication apparatus.

In this embodiment of this application, the first communication apparatus may be a terminal device (where an example in which the first communication apparatus is a terminal device is used for description below), and the second communication apparatus may be a network device (where an example in which the second communication apparatus is a network device is used for description below). Therefore, S220 may be understood as: The network device sends the first indication parameter to the terminal device. Alternatively, both the first communication apparatus and the second communication apparatus may be terminal devices. For example, in a D2D communication scenario, both the first communication apparatus and the second communication apparatus are terminal devices. Therefore, S220 may also be understood as: One terminal device sends the first indication parameter to another terminal device. Uniform descriptions are provided herein.

For ease of description, in this embodiment of this application, the technical solutions in embodiments of this application are described by using an example in which the second communication apparatus is a network device. However, a possibility that the second communication apparatus is a terminal device cannot be excluded.

In conclusion, S220 may be understood as: The first communication apparatus receives the first indication parameter, where the first communication apparatus is a terminal device.

S230: The first communication apparatus determines first codeword-to-layer mapping based on the first indication parameter.

Specifically, the first communication apparatus may determine the first codeword-to-layer mapping based on the first indication parameter. More specifically, the first communication apparatus may determine the first codeword-to-layer mapping after determining a correspondence between the first indication parameter and the first codeword-to-layer mapping.

For example, the first communication apparatus may determine the correspondence in the following three manners:

Manner #1: The second communication apparatus sends the correspondence to the first communication apparatus.
Manner #2: The first communication apparatus determines the correspondence based on the first indication parameter.
Manner #3: The correspondence is predefined.

For Manner #1, the first communication apparatus determines the codeword-to-layer mapping based on the first indication parameter sent by the second communication apparatus and the correspondence.

For Manner #2, the first communication apparatus may determine the correspondence based on the first indication parameter sent by the second communication apparatus. A process or a rule in which the first communication apparatus determines the correspondence based on the first indication parameter is consistent with a process or a rule in which the second communication apparatus determines the correspondence based on the first indication parameter. The rule for determining the correspondence based on the first indication parameter may be determined on a terminal device side and a network device side through predefinition in a protocol. In this way, the second communication apparatus can directly send the first indication parameter to the first communication apparatus, and does not need to send the correspondence. The first communication apparatus can determine the codeword-to-layer mapping based on the first indication parameter. In this way, signaling overheads can be reduced.

For Manner #3, a correspondence between an indication parameter and codeword-to-layer mapping is configured through predefinition, and includes the correspondence (which may be understood as the correspondence) between the first indication parameter and the codeword-to-layer mapping. The indication parameters include at least two candidate values, and there are at least two correspondences between the indication parameters and the codeword-to-layer mapping. The second communication apparatus can directly send the first indication parameter to the first communication apparatus, and does not need to send the correspondence. The first communication apparatus can determine the codeword-to-layer mapping based on the first indication parameter. In this way, signaling overheads can be reduced.

For Manner #1, in a possible implementation, the second communication apparatus may send the correspondence (which may be understood as the correspondence) between the first indication parameter and the codeword-to-layer mapping to the first communication apparatus in real time through physical layer signaling. For example, the second communication apparatus indicates the correspondence to the first communication apparatus through DCI or group DCI signaling.

For Manner #1, in a possible implementation, the second communication apparatus may send correspondences between the indication parameters and codeword-to-layer mapping to the first communication apparatus through higher layer signaling. The correspondences include the correspondence (which may be understood as the correspondence) between the first indication parameter and the codeword-to-layer mapping. The indication parameters include at least two candidate values, and there are at least two correspondences between the indication parameters and the codeword-to-layer mapping. For example, the second communication apparatus indicates the correspondences between the indication parameters and the codeword-to-layer mapping to the first communication apparatus through semi-static RRC signaling. The correspondences include the correspondence (which may be understood as the correspondence) between the first indication parameter and the codeword-to-layer mapping. The first communication apparatus may determine the correspondence. Compared with real-time indication of the correspondence through dynamic DCI, indication of the correspondences between the indication parameters and the codeword-to-layer mapping through a semi-static RRC indication can reduce signaling overheads.

For Manner #1, in a possible implementation, the first communication apparatus has a memory function for the correspondence between the first indication parameter and the codeword-to-layer mapping. Therefore, the second communication apparatus determines whether the correspondence has been indicated to the first communication apparatus, in other words, whether a correspondence that is between the first indication parameter and the codeword-to-layer mapping and that is stored by the first communication apparatus is the same as the correspondence. If the correspondences are the same, the correspondence does not need to be indicated again. If the correspondences are different, the second communication apparatus may send the correspondence (which may be understood as the correspondence) between the first indication parameter and the codeword-to-layer mapping to the first communication apparatus through physical layer signaling. For example, the second communication apparatus indicates the correspondence to the first communication apparatus through DCI or group DCI signaling. The first notification apparatus receives the correspondence, and stores the correspondence. Then, when receiving the first indication parameter again, the first communication apparatus may directly determine the correspondence, and the second communication apparatus does not need to indicate the correspondence. Compared with real-time indication of the correspondence through dynamic DCI, in this manner, signaling overheads can be reduced.

For Manner #1, indication information corresponding to the correspondence may be user-level indication information, user group-level indication information, or cell-level indication information.

Specifically, the user-level indication information means that the correspondence sent by the second communication apparatus to the first communication apparatus is applicable only to the first communication apparatus, and is not applicable to another first communication apparatus. Specifically, the user group-level indication information means that the correspondence sent by the second communication apparatus to the first communication apparatus is not only applicable to the first communication apparatus, but also applicable to another first communication apparatus. The cell-level indication information means that the correspondence sent by the second communication apparatus to the first communication apparatus is not only applicable to the first communication apparatus, but also applicable to all other first communication apparatuses that are located in a same cell as the first communication apparatus. For a user-level indication manner, a user group-level indication manner, and a cell-level indication manner in Manner #1, refer to the foregoing descriptions of the first indication parameter.

After obtaining the first indication parameter and determining the correspondence between the first indication parameter and the first codeword-to-layer mapping, the first communication apparatus may determine the first codeword-to-layer mapping based on the first indication parameter and the correspondence between the first indication parameter and the first codeword-to-layer mapping.

In a possible implementation, the first communication apparatus sends capability indication information to the second communication apparatus. The capability indication information indicates whether the first communication apparatus supports dynamic codeword-to-layer mapping. This step may be performed before S210 or S230. This is not specifically limited in this embodiment of this application.

Specifically, if the capability indication information indicates that the first communication apparatus does not support the dynamic codeword-to-layer mapping, the second communication apparatus maintains existing codeword-to-layer mapping with the first communication apparatus. If the capability indication information indicates that the first communication apparatus supports the dynamic codeword-to-layer mapping, the second communication apparatus maintains the dynamic codeword-to-layer mapping with the first communication apparatus by using the foregoing technical solution.

In a possible implementation, the first communication apparatus sends a second indication parameter to the second communication apparatus. The first indication parameter sent by the second communication apparatus to the first communication apparatus may be the second indication parameter or may not be the second indication parameter. This step may be performed before step S210. For example, the first communication apparatus sends the second indication parameter to the second communication apparatus before the second communication apparatus sends the first indication parameter.

For example, the first communication apparatus indicates the second indication parameter (where the second indication parameter may be understood as an indication parameter recommended by the first communication apparatus) in a CSI measurement feedback. For example, the first communication apparatus receives a CSI-RS sent by the second communication apparatus, and indicates, in the CSI measurement feedback, the second indication parameter corresponding to a CSI resource. Alternatively, the terminal device includes the second indication parameter in the CSI feedback, and the second indication parameter does not correspond to the CSI resource.

For another example, the first communication apparatus indicates the second indication parameter during data transmission. Specifically, the first communication apparatus receives downlink data sent by the second communication apparatus, and indicates the second indication parameter in an ACK/NACK. For example, the first communication apparatus determines the second indication parameter based on detection performance of a DMRS. The first communication apparatus feeds back the second indication parameter through joint coding with a non-acknowledgment (non-acknowledgment, NACK) mechanism (for example, "NACK+#X"), or may feed back the second indication parameter through independent coding.

In a possible implementation, after receiving the first indication parameter, the first communication apparatus sends, to the second communication apparatus, first indication information indicating whether the first indication parameter is applicable or needs to be updated. Alternatively, after receiving the first indication parameter, the first communication apparatus sends, to the second communication apparatus, second indication information including a second indication parameter.

In a possible implementation, after receiving the first indication parameter, the first communication apparatus determines, based on detection performance of a DMRS, whether the first indication parameter is appropriate. The first communication apparatus may send, to the second communication apparatus through joint coding with a NACK mechanism (for example, NACK+applicable or NACK+inapplicable), first indication information indicating whether the first indication parameter is applicable or needs to be updated, or may send, to the second communication apparatus through independent coding, the first indication information indicating whether the first indication parameter is applicable or needs to be updated.

In a possible implementation, the second communication apparatus sends a third indication parameter again based on the first indication information or second indication information.

In a possible implementation, the correspondence in this embodiment of this application may be adjusted based on an interleaving scheme, for example, the first indication parameter, the correspondence between the first indication parameter and the codeword-to-layer mapping, or the codeword-to-layer mapping. The interleaving scheme may be inter-codeword interleaving, intra-codeword interleaving, or the like. In this embodiment of this application, communication performance can be improved by using the interleaving scheme.

Specifically, different first indication parameters correspond to different codeword-to-layer mapping. The first communication apparatus receives the different first indication parameters, and determines corresponding codeword-to-layer mapping based on a received first indication parameter, to flexibly use the different codeword-to-layer mapping. In this case, the codeword-to-layer mapping used by the first communication apparatus can be flexibly adjusted, so that the codeword-to-layer mapping used by the first communication apparatus can meet a requirement of a gradually enlarged scale of transmit antennas and receive antennas of a MIMO system.

Based on the foregoing technical solution, in this embodiment of this application, the codeword-to-layer mapping can be dynamically adjusted and/or indicated. For example, a terminal device may use different codeword-to-layer mapping at different moments. For another example, different terminal devices may use different codeword-to-layer mapping at a same moment. Therefore, in a scenario in which a performance difference between streams of the terminal devices is large or a scenario in which a performance difference between streams at the different moments is large, the different codeword-to-layer mapping may be used, and transmission of more streams may also be supported, so that the codeword-to-layer mapping can meet a requirement of a gradually enlarged scale of transmit antennas and receive antennas of a MIMO system. For example, transmission on more layers can be supported, and the terminal device can change the codeword-to-layer mapping.

In addition, the terminal device may directly determine the correspondence between the first indication parameter and the codeword-to-layer mapping based on the first indication parameter, and the network device does not need to indicate the correspondence. In this way, the network device needs to only dynamically indicate the first indication parameter. Compared with indirect dynamic indication of the codeword-to-layer mapping, in this embodiment of this application, signaling overheads can be effectively reduced.

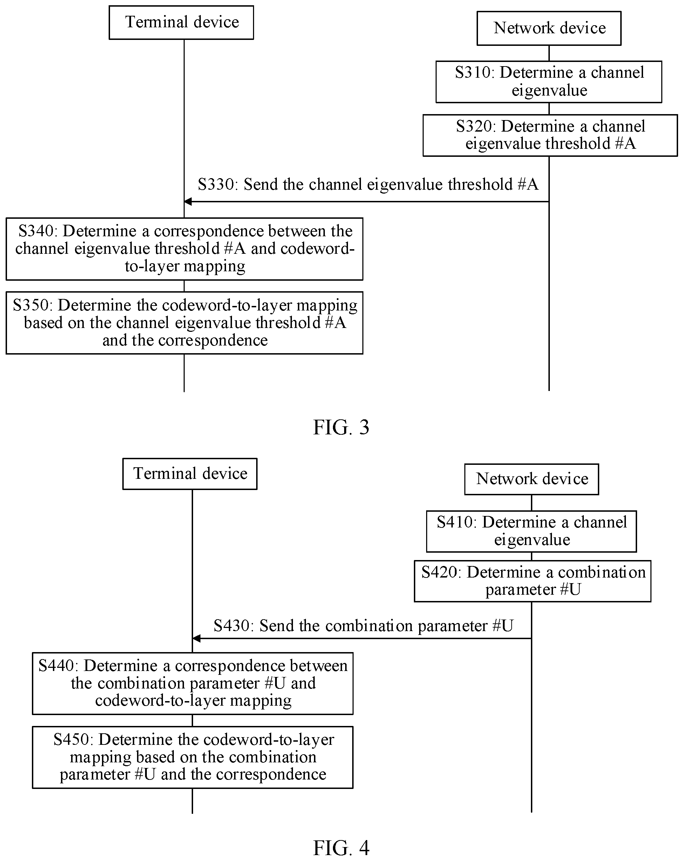

The following further describes the technical solution in FIG. 2 with reference to FIG. 3 to FIG. 5. The technical solutions in FIG. 3 to FIG. 5 may be understood as support for the technical solution in FIG. 2, or may be understood as other expressions of the technical solution in FIG. 2.

FIG. 3 is an interaction flowchart of another communication method according to an embodiment of this application. The method #300 shown in FIG. 3 is an implementation in which a terminal device determines a correspondence between a channel eigenvalue threshold and codeword-to-layer mapping based on the channel eigenvalue threshold, and determines the codeword-to-layer mapping. In this implementation, the correspondence does not need to be predefined, or the correspondence is indicated by a network device. The method #300 includes the following steps.

S310: The network device determines a channel eigenvalue.

Specifically, one stream corresponds to one channel eigenvalue. The channel eigenvalue represents channel quality of the stream. For example, a larger channel eigenvalue of a stream indicates better channel quality of the stream.

In a possible implementation, the terminal device reports, to the network device, a channel eigenvalue of a stream, a related parameter describing a change relationship of the channel eigenvalue of the stream, and/or the like. Correspondingly, the network device receives the channel eigenvalue of the stream and/or the related parameter describing the change relationship of the channel eigenvalue of the stream that are/is reported by the terminal device, to determine the channel eigenvalue.

In a possible implementation, the network device obtains a channel eigenvalue of a stream through a channel H between the network device and the terminal device. For example, the network device performs singular value decomposition (singular value decomposition, SVD) decomposition on the channel H between the network device and the terminal device, to obtain n channel eigenvalues that are in one-to-one correspondence with n streams, where $n \leq \min$ {quantity of rows of H, quantity of columns of H}.

Optionally, the network device selects n flows from min{quantity of rows of H, quantity of columns of H} streams, and a selection rule may be determined through predefinition.

For example, a selection rule #P may include selecting n streams whose channel eigenvalues are the maximum, or selecting n streams whose channel eigenvalues are greater than or equal to a channel eigenvalue threshold.

S320: The network device determines a channel eigenvalue threshold #A.

Specifically, the network device selects the channel eigenvalue threshold #A (which may be understood as a first indication parameter) from at least two candidate values of a channel eigenvalue threshold (which may be understood as an indication parameter) based on a criterion #Q. For example, the criterion #Q may mean that the terminal device has optimal performance, minimum signaling overheads, or the like.

There is a correspondence between the channel eigenvalue threshold #A and codeword-to-layer mapping. For example, the candidate values of the channel eigenvalue threshold (dB) are {5, 10}. A channel eigenvalue threshold (dB) 5 corresponds to codeword-to-layer mapping is #A1, as shown in Table 7. A channel eigenvalue threshold (dB) 10 corresponds codeword-to-layer mapping is #B 1, as shown in Table 8. It is assumed that #A is 10.

In a possible implementation, the network device determines the correspondence between the channel eigenvalue threshold #A and the codeword-to-layer mapping based on the channel eigenvalue threshold #A, and determines the codeword-to-layer mapping corresponding to the channel eigenvalue threshold #A. A specific process in which the network device determines the correspondence between the channel eigenvalue threshold #A and the codeword-to-layer mapping is the same as the following process (S350) in which the terminal device determines the correspondence between the channel eigenvalue threshold #A and the codeword-to-layer mapping. Details are not described herein again.

S330: The network device sends the channel eigenvalue threshold #A to the terminal device.

Correspondingly, the terminal device receives the channel eigenvalue threshold #A sent by the network device.

Specifically, the network device may send the channel eigenvalue threshold #Y to the first communication apparatus through higher layer signaling or physical layer signaling. The network device may indicate the channel eigenvalue threshold #A through an implementation in the foregoing embodiment. Details are not described herein again.

For example, the network device may send the channel eigenvalue threshold #A to the terminal device in at least one of data transmission, CSI feedback, and coding/decoding, or may send the channel eigenvalue threshold #A to the terminal device in another communication procedure. This is not limited in this embodiment of this application. The data transmission may include data receiving and/or data sending.

In a possible implementation, the channel eigenvalue threshold #A may be applicable to one terminal device. In other words, the terminal device may use the channel eigenvalue threshold #A.

In a possible implementation, the channel eigenvalue threshold #A may also be applicable to a plurality of terminal devices. In other words, the plurality of terminal devices may share the channel eigenvalue threshold #A.

In a possible implementation, the channel eigenvalue threshold #A may alternatively be applicable to all terminal devices in a cell.

S340: The terminal device determines a channel eigenvalue.

Specifically, the terminal device may simultaneously perform S330 and S340, may perform S330 before S340, or may perform S340 before S330. This is not limited in this embodiment of this application.

In a possible implementation, the terminal device obtains a channel eigenvalue of a stream through a channel H' between the network device and the terminal device. For example, the terminal device performs SVD decomposition on the channel H' between the network device and the terminal device, to obtain n channel eigenvalues that are in one-to-one correspondence with n streams, where n ≤min{quantity of rows of H', quantity of columns of H'}.

In a possible implementation, the terminal device selects n streams from min{quantity of rows of H', quantity of columns of H'} streams, and a selection rule may be predefined/indicated by the network device to the terminal device.

For example, the selection rule may include selecting n streams whose channel eigenvalues are the maximum, or selecting n streams whose channel eigenvalues are greater than or equal to a channel eigenvalue threshold. The channel eigenvalue determined by the terminal device is the same as that determined by the network device, or H is the same as H'.

S350: The terminal device determines, based on the channel eigenvalue threshold #A, a correspondence between the channel eigenvalue threshold #A and codeword-to-layer mapping.

Specifically, the terminal device determines the correspondence between the channel eigenvalue threshold (dB) #A and the codeword-to-layer mapping based on the following steps.

S350#A: Determine a difference between each channel eigenvalue and a maximum channel eigenvalue.

For example, the terminal device sorts the n channel eigenvalues determined in S340 in descending (or ascending) order. A sorting result is expressed as follows:

$$e_0, e_1, ..., e_{n-1} \ (1)$$

After determining the maximum channel eigenvalue $e_{max}$ in the n channel eigenvalues, the terminal device determines the difference between each channel eigenvalue and the maximum channel eigenvalue. The difference is expressed as:

$$\Delta e_0, \Delta e_1, ..., \Delta e_{n-1}, \Delta e_i = 10\log\frac{e_i^2}{e_{max}^2}, \text{where } 0 \le i \le n-1 \text{ and } e_{max} = \max_{1 \le i \le n}(e_i) \ (2)$$

In the formulas (1) and (2), $e_{max} = e_0$.

Table 6 shows an example listing the difference between each of the n channel eigenvalues and the maximum channel eigenvalue. For details, refer to Table 6.

**Table 6 Difference between each channel eigenvalue and maximum channel eigenvalue**

| Stream identifier | Difference (dB) |
| --- | --- |
| 0 | 0 |
| 1 | -0.95 |
| 2 | -6.80 |
| 3 | -8.27 |
| 4 | -8.92 |
| 5 | -9.19 |
| 6 | -9.57 |
| 7 | -10.00 |
| 8 | -10.79 |
| 9 | -11.57 |
| 10 | -11.89 |
| 11 | -12.24 |
| 12 | -12.89 |
| 13 | -13.12 |
| 14 | -14.65 |
| 15 | -15.12 |
| 16 | -15.52 |
| 17 | -16.51 |
| 18 | -17.20 |
| 19 | -17.79 |
| 20 | -1806 |
| 21 | -18.78 |
| 22 | -19.64 |
| 23 | -20.28 |
| 24 | -20.53 |
| 25 | -22.01 |
| 26 | -23.37 |
| 27 | -25.07 |
| 28 | -26.02 |
| 29 | -27.36 |
| 30 | -28.68 |
| 31 | -30.29 |

In Table 6, n=32, and a channel eigenvalue of a stream whose stream identifier is 0 is the maximum channel eigenvalue. A value shown in the 2nd column in Table 6 represents a difference between a channel eigenvalue of a stream corresponding to each stream identifier and the channel eigenvalue of the stream whose stream number is 0. A unit of the difference is dB. The difference may also be understood as an energy difference between each channel eigenvalue and the maximum channel eigenvalue.

S350#B: Group the n streams into $C_n^{tmp}$ groups based on the channel eigenvalue threshold #A. A stream identifier included in a $(q^{tmp})$th group is denoted as:

$$CW_q^{n,tmp} = \{j \big| -(q^{tmp} + 1) * \#A \le \Delta e_j \le -q^{tmp} * \#A, 0 \le j \le n - 1\}, \text{where } 0 \le q^{tmp} \le C_n^{tmp} - 1$$

(3).

S350#C: Remove a group being an empty set, where a group identifier of a non-empty set is:

$$S_n = \{q^{tmp} \big| \text{card}(CW_q^{n,tmp}) \ne 0, \text{where } 0 \le q^{tmp} \le C_n^{tmp} - 1\} \quad (4)$$

S350#D: Obtain that a quantity of to-be-mapped codewords is $C_n$. This may be understood as that n layers are mapped to the $C_n$ codewords:

$$C_n = \text{card}(S_n) \quad (5)$$

S350#E: Obtain each codeword-to-layer mapping relationship. A layer identifier included in a $q^{th}$ codeword is shown as follows. This may also be understood as: A mapping relationship from the $q^{th}$ codeword to a layer is shown as follows:

$$CW_q^n = \{j \big| -(S_n(q) + 1) * \#A \le \Delta e_j \le -S_n \, (q) * \#A, 0 \le j \le n - 1\}, \text{ where } 0 \le q \le C_n - 1 \quad (6)$$

Based on the formula (6), the mapping relationship from each codeword (codeword 0 to codeword $C_n$- 1) to the layer may be obtained.

By performing S350, the terminal device determines a correspondence between each channel eigenvalue threshold and codeword-to-layer mapping. In other words, one channel eigenvalue threshold corresponds to one time of codeword-to-layer mapping.

For example, it is assumed that the selection rule #P is to select n streams with maximum channel eigenvalues. Table 7 shows an example listing codeword-to-layer mapping corresponding to the channel eigenvalue threshold (dB) 5. Table 8 shows an example listing codeword-to-layer mapping corresponding to the channel eigenvalue threshold (dB) 10. Based on the foregoing steps, the 3rd column in Table 7 or Table 8: codeword-to-layer mapping 1, may be obtained. There is a correspondence between the 4th column and the 3rd column. The 4th column: codeword-to-layer mapping 2, may be deduced based on the 3rd column. For the correspondence, refer to Table 2 or Table 3. Details are not described below again.

**Table 7 Codeword-to-layer mapping corresponding to the channel eigenvalue threshold (dB) 5**

| Quantity of layers | Quantity of codewords | Codeword-to-layer mapping 1 | Codeword-to-layer mapping 2, where $i=0, 1, ..., V_{symb}^{layer}-1$ |
|---|---|---|---|
| 1 | 1 | CW$_0$: [0] | $x^0(i)=d^0(i)$ <br> $V_{symb}^{layer}=V_{symb}^0$ |
| 2 | 1 | CW$_0$: [0, 1] | $x^0(i)=d^0(2*i)$ <br> $x^1(i)=d^0(2*i+1)$ <br> $V_{symb}^{layer}=V_{symb}^0/2$ |
| 3 | 2 | CW$_0$: [0, 1]; and CW$_1$: [2] | $x^0(i)=d^0(2*i)$ <br> $x^1(i)=d^0(2*i+1)$ <br> $x^2(i)=d^1(i)$ <br> $V_{symb}^{layer}=V_{symb}^0/2=V_{symb}^1$ |

(continued)

| Quantity of layers | Quantity of codewords | Codeword-to-layer mapping 1 | Codeword-to-layer mapping 2, where $i=0, 1, ..., V_{\text{symb}}^{layer}-1$ |
|---|---|---|---|
| 4 | 2 | CW$_0$: [0, 1]; and CW$_1$: [2, 3] | $x^0(i)=d^0(2*i)$ <br> $x^1(i)=d^0(2*i+1)$ <br> $x^2(i)=d^1(i)$ <br> $x^3(i)=d^1(2*i+1)$ <br><br> $V_{symb}^{layer}=V_{symb}^0/2=V_{symb}^1/2$ |
| 5 | 2 | CW$_0$: [0, 1]; and CW$_1$: [2, 3, 4] | $x^0(i)=d^0(2*i)$ <br> $x^1(i)=d^0(2*i+1)$ <br> $x^2(i)=d^1(3*i)$ <br> $x^3(i)=d^1(3*i+1)$ <br> $x^4(i)=d^1(3*i+2)$ <br><br> $V_{symb}^{layer}=V_{symb}^0/2=V_{symb}^1/3$ |
| 6 | 2 | CW$_0$: [0, 1]; and CW$_1$: [2, 3, 4, 5] | $x^0(i)=d^0(2*i)$ <br> $x^1(i)=d^0(2*i+1)$ <br> $x^2(i)=d^1(4*i)$ <br> $x^3(i)=d^1(4*i+1)$ <br> $x^4(i)=d^1(4*i+2)$ <br> $x^5(i)=d^1(4*i+3)$ <br><br> $V_{symb}^{layer}=V_{symb}^0/2=V_{symb}^1/4$ |
| 7 | 2 | CW$_0$: [0, 1]; and CW$_1$: [2, 3, 4, 5, 6] | $x^0(i)=d^0(2*i)$ <br> $x^1(i)=d^0(2*i+1)$ <br> $x^2(i)=d^1(5*i)$ <br> $x^3(i)=d^1(5*i+1)$ <br> $x^4(i)=d^1(5*i+2)$ <br> $x^5(i)=d^1(5*i+3)$ <br> $x^6(i)=d^1(5*i+4)$ <br><br> $V_{symb}^{layer}=V_{symb}^0/2=V_{symb}^1/5$ |
| 8 | 3 | CW$_0$: [0, 1]; <br> CW$_1$: [2, 3, 4, 5, 6], and CW$_2$: [7]; | $x^0(i)=d^0(2*i)$ <br> $x^1(i)=d^0(2*i+1)$ <br> $x^2(i)=d^1(5*i)$ <br> $x^3(i)=d^1(5*i+1)$ <br> $x^4(i)=d^1(5*i+2)$ <br> $x^5(i)=d^1(5*i+3)$ <br> $x^6(i)=d^1(5*i+4)$ <br> $x^7(i)=d^2(i)$ <br><br> $V_{symb}^{layer}=V_{symb}^0/2=V_{symb}^1/5=V_{symb}^2$ |
| ... | ... | ... | ... |

(continued)

| Quantity of layers | Quantity of codewords | Codeword-to-layer mapping 1 | Codeword-to-layer mapping 2, where $i=0, 1, ..., V_{\text{symb}}^{layer}-1$ |
|---|---|---|---|
| 32 | 7 | CW$_0$: [0, 1];<br>CW$_1$: [2, 3, 4, 5, 6],<br>CW$_2$: [7, 8, 9, 10, 11, 12, 13, 14];<br>CW$_3$: [15, 16, 17, 18, 19, 20, 21, 22];<br>CW$_4$: [23, 24, 25, 26];<br>CW$_5$: [27, 28, 29, 30]; and<br>CW$_{31}$: [31]; | $x^0(i)=d^0(2*i)$<br>$x^1(i)=d^0(2*i+1)$<br>$x^2(i)=d^1(5*i)$<br>$x^3(i)=d^1(5*i+1)$<br>$x^4(i)=d^1(5*i+2)$<br>$x^5(i)=d^1(5*i+3)$<br>$x^6(i)=d^1(5*i+4)$<br>$x^7(i)=d^2(8*i)$<br>$x^8(i)=d^2(8*i+1)$<br>$x^9(i)=d^2(8*i+2)$<br>$x^{10}(i)=d^2(8*i+3\ )$<br>$x^{11}(i)=d^2(8*i+4)$<br>$x^{12}(i)=d^2(8*i+5)$<br>$x^{13}(i)=d^2(8*i+6)$<br>$x^{14}(i)=d^2(8*i+7)$<br>$x^{15}(i)=d^3(8*i)$<br>$x^{16}(i)=d^3(8*i+1)$<br>$x^{17}(i)=d^3(8*i+2)$<br>$x^{18}(i)=d^3(8*i+3)$<br>$x^{19}(i)=d^3(8*i+4)$<br>$x^{20}(i)=d^3(8*i+5)$<br>$x^{21}(i)=d^3(8*i+6)$<br>$x^{22}(i)=d^3(8*i+7)$<br>$x^{23}(i)=d^4(4*i)$<br>$x^{24}(i)=d^4(4*i+1)$<br>$x^{25}(i)=d^4(4*i+2)$<br>$x^{26}(i)=d^4(4*i+3)$<br>$x^{27}(i)=d^5(4*i)$<br>$x^{28}(i)=d^5(4*i+1)$<br>$x^{29}(i)=d^5(4*i+2)$<br>$x^{30}(i)=d^5(4*i+3)$<br>$x^{31}(i)=d^6(i)$<br>$V_{symb}^{layer}=V_{symb}^0/2=V_{symb}^1/5=V_{symb}^2/8=$<br>$V_{symb}^3/8=V_{symb}^4/4=V_{symb}^5/4=V_{symb}^6$ |

**Table 8 Codeword-to-layer mapping corresponding to the channel eigenvalue threshold (dB) 10**

| Quantity of layers | Quantity of codewords | Codeword-to-layer mapping 1 | Codeword-to-layer mapping 2, where $i=0, 1, ..., V_{\text{symb}}^{layer}-1$ |
|---|---|---|---|
| 1 | 1 | CW$_0$: [0] | $x^0(i)=d^0(i)$<br>$V_{symb}^{layer}=V_{symb}^0$ |

(continued)

| Quantity of layers | Quantity of codewords | Codeword-to-layer mapping 1 | Codeword-to-layer mapping 2, where $i=0, 1, ..., V_{symb}^{layer}-1$ |
|---|---|---|---|
| 2 | 1 | $CW_0$: [0, 1] | $x^0(i)=d^0(2*i)$ <br> $x^1(i)=d^0(2*i+1)$ <br><br> $V_{symb}^{layer}=V_{symb}^0/2$ |
| 3 | 1 | $CW_0$: [0, 1, 2] | $x^0(i)=d^0(3*i)$ <br> $x^1(i)=d^0(3*i+1)$ <br> $x^2(i)=d^0(3*i+2)$ <br><br> $V_{symb}^{layer}=V_{symb}^0/3$ |
| 4 | 1 | $CW_0$: [0, 1, 2, 3] | $x^0(i)=d^0(4*i)$ <br> $x^1(i)=d^0(4*i+1)$ <br> $x^2(i)=d^0(4*i+2)$ <br> $x^3(i)=d^0(4*i+3)$ <br><br> $V_{symb}^{layer}=V_{symb}^0/4$ |
| 5 | 1 | $CW_0$: [0, 1, 2, 3, 4] | $x^0(i)=d^0(5*i)$ <br> $x^1(i)=d^0(5*i+1)$ <br> $x^2(i)=d^0(5*i+2)$ <br> $x^3(i)=d^0(5*i+3)$ <br> $x^4(i)=d^0(5*i+4)$ <br><br> $V_{symb}^{layer}=V_{symb}^0/5$ |
| 6 | 1 | $CW_0$: [0, 1, 2, 3, 4, 5] | $x^0(i)=d^0(6*i)$ <br> $x^1(i)=d^0(6*i+1)$ <br> $x^2(i)=d^0(6*i+2)$ $x^3(i)=d^0(6*i+3)$ <br> $x^4(i)=d^0(6*i+4 )$ <br> $x^5(i)=d^0(6*i+5)$ <br><br> $V_{symb}^{layer}=V_{symb}^0/6$ |
| 7 | 1 | $CW_0$: [0, 1, 2, 3, 4, 5, 6] | $x^0(i)=d^0(7*i)$ <br> $x^1(i)=d^0(7*i+1)$ <br> $x^2(i)=d^0(7*i+2)$ <br> $x^3(i)=d^0(7*i+3)$ <br> $x^4(i)=d^0(7*i+4)$ <br> $x^5(i)=d^0(7*i+5)$ <br> $x^6(i)=d^0(7*i+6)$ <br><br> $V_{symb}^{layer}=V_{symb}^0/7$ |
| 8 | 2 | $CW_0$: [0, 1, 2, 3, 4, 5, 6]; and $CW_1$: [7] | $x^0(i)=d^07*i)$ <br> $x^1(i)=d^0(7*i+1)$ <br> $x^2(i)=d^0(7*i+2)$ <br> $x^3(i)=d^0(7*i+3)$ <br> $x^4(i)=d^0(7*i+4)$ <br> $x^5(i)=d^0(7*i+5)$ <br> $x^6(i)=d^0(7*i+6)$ <br> $x^7(i)=d^1(i)$ |

(continued)

| Quantity of layers | Quantity of codewords | Codeword-to-layer mapping 1 | Codeword-to-layer mapping 2, where $i=0, 1, ..., V^{layer}_{symb}-1$ |
|---|---|---|---|
| | | | $V^{layer}_{symb}=V^0_{symb}/7=V^1_{symb}$ |
| ... | ... | ... | ... |
| 32 | 4 | CW$_0$: [0, 1, 2, 3, 4, 5, 6]<br>CW$_1$: [7, 8, 9, 10, 11, 12, 13, 14, 15, 16, 17, 18, 19, 20, 21, 22]<br>CW$_2$: [23, 24, 25, 26, 27, 28, 29, 30]<br>CW$_3$: [31] | $x^0(i)=d^0(7*i)$<br>$x^1(i)=d^0(7*i+1)$<br>$x^2(i)=d^0(7*i+2)$<br>$x^3(i)=d^0(7*i+3)$<br>$x^4(i)=d^0(7*i+4)$<br>$x^5(i)=d^0(7*i+5)$<br>$x^6(i)=d^0(7*i+6)$<br>$x^7(i)=d^1(16*i)$<br>$x^8(i)=d^1(16*i+1)$<br>$x^9(i)=d^1(16*i+2)$<br>$x^{10}(i)=d^1(16*i+3)$<br>$x^{11}(i)=d^1(16*i+4)$<br>$x^{12}(i)=d^1(16*i+5)$<br>$x^{13}(i)=d^1(16*i+6)$<br>$x^{14}(i)=d^1(16*i+7)$<br>$x^{15}(i)=d^1(16*i+8)$ $x^{16}(i)=d^1(16*i+9)$<br>$x^{17}(i)=d^1(16*i+10)$<br>$x^{18}(i)=d^1(16*i+11)$<br>$x^{19}(i)=d^1(16*i+12)$<br>$x^{20}(i)=d^1(16*i+13)$<br>$x^{21}(i)=d^1(16*i+14)$<br>$x^{22}(i)=d^1(16*i+15)$<br>$x^{23}(i)=d^2(8*i)$<br>$x^{24}(i)=d^2(8*i+1)$<br>$x^{25}(i)=d^2(8*i+2)$<br>$x^{26}(i)=d^2(8*i+3)$<br>$x^{27}(i)=d^2(8*i+4)$<br>$x^{28}(i)=d^2(8*i+5)$<br>$x^{29}(i)=d^2(8*i+6)$<br>$x^{30}(i)=d^2(8*i+7)$<br>$x^{31}(i)=d^3(i)$<br>$V^{layer}_{symb}=V^0_{symb}/7=V^1_{symb}/16=V^2_{symb}/8=V^3_{symb}$ |

S360: The terminal device determines the codeword-to-layer mapping based on the channel eigenvalue threshold #A and the correspondence.

Specifically, the terminal device determines, based on the channel eigenvalue threshold #A and the correspondence between the channel eigenvalue threshold #A and the codeword-to-layer mapping, the codeword-to-layer mapping corresponding to the channel eigenvalue threshold #A.

The correspondence between the channel eigenvalue threshold #A and the codeword-to-layer mapping that is determined by the terminal device is consistent with the correspondence between the channel eigenvalue threshold #A and the codeword-to-layer mapping that is determined by the network device. Specifically, the following manners may be used:

In a TDD system, the network device indicates the terminal device to use a channel eigenvalue of a channel stream at a reference moment as a channel eigenvalue for determining codeword-to-layer mapping. In this way, it can be ensured that a channel eigenvalue used by the terminal device is consistent with a channel eigenvalue used by the network device.

During downlink transmission in an FDD system, the terminal device feeds back a channel eigenvalue of each stream to the network device. In this way, it can be ensured that a channel eigenvalue used by the terminal device is consistent with a channel eigenvalue used by the network device.

During uplink transmission in the FDD system, the terminal device may use codeword-to-layer mapping that is the same as that in the downlink transmission in the FDD system.

Optionally, the terminal device sends capability indication information to the network device. The capability indication information indicates whether the terminal device supports dynamic codeword-to-layer mapping.

Specifically, if the capability indication information indicates that the terminal device does not support the dynamic codeword-to-layer mapping, the network device maintains existing codeword-to-layer mapping with the terminal device. If the capability indication information indicates that the terminal device supports the dynamic codeword-to-layer mapping, the network device maintains the dynamic codeword-to-layer mapping with the terminal device by using the foregoing technical solution.

Optionally, the terminal device sends, to the network device, first indication information indicating whether the first indication parameter is applicable or needs to be updated. Alternatively, after receiving the first indication parameter sent by the network device, the terminal device sends, to the network device, second indication information including a recommended indication parameter. In this case, the first indication information or the second indication information may be sent in the foregoing implementation, and details are not described herein again.

Specifically, in the foregoing technical solution, a plurality of streams with similar channel eigenvalues are mapped to a same codeword by configuring the channel eigenvalue threshold, and an allocation result is that a maximum difference between channel eigenvalues of any two streams in the same codeword does not exceed a configured channel eigenvalue threshold. In this way, in this embodiment of this application, a modulation coding scheme (modulation coding scheme, MCS) value that is configured based on a codeword may be close to an MCS value of each stream corresponding to the codeword, so that performance losses of a MIMO system can be reduced.

In this embodiment of this application, a value of the channel eigenvalue threshold may be changed. In this embodiment of this application, the value of the channel eigenvalue threshold is adjusted, so that balance can be achieved between capacity performance and signaling overheads of the MIMO system. For example, a larger channel eigenvalue threshold indicates a smaller capacity and smaller overheads, and a smaller channel eigenvalue threshold indicates a larger capacity and larger overheads.

In addition, in the technical solution of the method #300 shown in FIG. 3, the terminal device determines the channel eigenvalue by itself, then determines the correspondence between the channel eigenvalue threshold and the codeword-to-layer mapping based on the channel eigenvalue threshold sent by the network device to the terminal device, and determines the codeword-to-layer mapping corresponding to the channel eigenvalue threshold. When the correspondence is sent by the network device to the terminal device or is predefined in a protocol, the terminal device may not need to determine the channel eigenvalue, and directly determine the corresponding codeword-to-layer mapping based on the channel eigenvalue threshold sent by the network device to the terminal device and the correspondence that is sent by the network device to the terminal device or predefined in the protocol. For specific descriptions, refer to the foregoing descriptions of S230. The descriptions are also applicable to the following descriptions, and details are not described below again.

Based on the foregoing technical solution, in this embodiment of this application, a plurality of streams with similar channel eigenvalues are mapped to a same codeword, and a plurality of streams with different channel eigenvalues are mapped to different codewords. In this way, signaling overheads can be effectively reduced. A larger quantity of codewords indicates higher signaling overheads. When signaling overheads are the same, in this embodiment of this application, a system capacity of the MIMO system can be effectively increased.

In addition, in this embodiment of this application, transmission of any quantity of streams can be supported, and dynamic codeword-to-layer mapping can be supported. Different terminal devices may flexibly and dynamically adjust codeword-to-layer mapping based on channel eigenvalue thresholds of streams at different moments. When a channel difference between different terminal devices is large or a channel of a terminal device differs greatly at different moments, compared with a fixed mapping relationship, in this embodiment of this application, the system capacity can be increased. In this embodiment of this application, the value of the channel eigenvalue threshold may be further changed, to achieve the balance between the capacity performance and the signaling overheads of the MIMO system, and meet the requirement of the increasingly developed MIMO system.

In addition, the terminal device may determine the correspondence between the channel eigenvalue threshold and the codeword-to-layer mapping based on the channel eigenvalue threshold, and the correspondence does not need to be indicated by the network device or predefined. The network device needs to only dynamically indicate the channel eigenvalue threshold. Compared with indirect dynamic indication of the codeword-to-layer mapping, in this embodiment of this application, signaling overheads can be effectively reduced.

In a scenario in which a channel of a terminal device frequently changes or a channel difference between terminal devices is distinct, compared with a fixed codeword-to-layer mapping relationship, in this embodiment of this application, the system capacity can be increased. Compared with a method for directly and dynamically indicating a codeword-to-layer mapping relationship, in this embodiment of this application, the channel eigenvalue threshold is dynamically indicated, so that signaling overheads can be effectively reduced.

In the descriptions of the method #300 in this embodiment of this application, the channel eigenvalue threshold is the first indication parameter. However, the first indication parameter may alternatively be a signal power threshold, a signal energy threshold, a reference signal received power threshold, a signal-to-noise ratio threshold, or a signal to interference plus noise ratio threshold. For example, the channel eigenvalue threshold in the solution may be replaced with the signal power threshold, the signal energy threshold, the reference signal received power threshold, the signal-to-noise ratio threshold, or the signal to interference plus noise ratio threshold, and the channel eigenvalue may be replaced with signal power, signal energy, reference signal received power, a signal-to-noise ratio, or a signal to interference plus noise ratio. Therefore, for the technical solution related to the first indication parameter mentioned above, refer to the content shown in the method #300. Details are not described in this embodiment of this application.

As mentioned above, the codeword-to-layer mapping may alternatively include a specific row or column in a codeword-to-layer mapping table. Therefore, that there is the correspondence between the first indication parameter and the codeword-to-layer mapping may be understood as follows: There is a correspondence between the first indication parameter and the specific row or column in the codeword-to-layer mapping table (where the mapping table is Table 7).

For example, in Table 7, the channel eigenvalue threshold (dB) 5 corresponds to the 3$^{rd}$ row in Table 7, and the channel eigenvalue threshold (dB) 10 corresponds to the 4$^{th}$ row in Table 7. For descriptions of a correspondence between the first indication parameter and a specific row or column in a codeword-to-layer mapping table, refer to the content. The content is merely used as an example for understanding.

FIG. 4 is an interaction diagram of still another communication method according to an embodiment of this application. The method #400 shown in FIG. 4 is used to dynamically indicate codeword-to-layer mapping based on a channel eigenvalue threshold and a layer identifier. Specifically, a terminal device determines the corresponding codeword-to-layer mapping based on the channel eigenvalue threshold and the layer identifier. In this implementation, the correspondence between the channel eigenvalue threshold and layer identifier and the codeword-to-layer mapping does not need to be predefined, or the correspondence between the channel eigenvalue threshold and layer identifier and the codeword-to-layer mapping is indicated by a network device. The method #400 includes the following steps.

S410: The network device determines a channel eigenvalue.

For specific descriptions, refer to S310. Details are not described herein again.

S420: The network device determines a combination parameter #U, where one combination parameter includes one channel eigenvalue threshold #U and a layer identifier #U.

In this embodiment of this application, the layer identifier may include at least one of the following: a start layer identifier, an end layer identifier, or the like. The layer identifier may be any positive integer less than or equal to a maximum quantity of supported layers.

For ease of description, in this embodiment of this application, the start layer identifier is used as an example to describe this technical solution, but another expression form is not limited. For example, the technical solution in this embodiment of this application is described based on the end layer identifier.

Specifically, the network device selects the combination parameter #U from candidate values of a combination parameter based on a criterion #Q. For example, the criterion #Q may mean that the terminal device has optimal performance, minimum signaling overheads, or the like. There is a correspondence between the combination parameter #U and codeword-to-layer mapping. For example, the candidate values of the combination parameter are {channel eigenvalue threshold (dB) 10 and layer identifier 0, channel eigenvalue threshold (dB) 10 and layer identifier 8}. Codeword-to-layer mapping corresponding to a combination parameter #A (channel eigenvalue threshold (dB) 10 and layer identifier 0) is #A, and codeword-to-layer mapping corresponding to a combination parameter #U (channel eigenvalue threshold (dB) 10 and layer identifier 8) is #B.

In a possible implementation, the network device determines the correspondence between the combination parameter #U and the codeword-to-layer mapping based on the combination parameter #U, and determines the codeword-to-layer mapping corresponding to the combination parameter #U. A specific process in which the network device determines the correspondence between the combination parameter #U and the codeword-to-layer mapping is the same as the following process (S450) in which the terminal device determines the correspondence between the combination parameter #U and the codeword-to-layer mapping. Details are not described herein again.

S430: The network device sends the combination parameter #U to the terminal device.

Correspondingly, the terminal device receives the combination parameter #U sent by the network device.

The combination parameter #U indicated by the network device to the terminal device may separately indicate a channel eigenvalue threshold #A and a layer identifier #R, or may jointly indicate the channel eigenvalue threshold #A and the layer identifier #R. The network device may send the combination parameter #U to the terminal device through higher layer signaling or physical layer signaling. The network device may indicate the combination parameter #U through the implementation in the foregoing embodiment. Details are not described herein again.

For example, the network device may send the combination parameter #U to the terminal device in at least one of data transmission, CSI feedback, and coding/decoding, or may send the combination parameter #U to the terminal device in another communication procedure. This is not limited in this embodiment of this application. The data transmission may include data receiving and/or data sending.

In a possible implementation, the combination parameter #U may be applicable to one terminal device. In other words, the terminal device may use the combination parameter #U.

In a possible implementation, the combination parameter #U may also be applicable to a plurality of terminal devices. In other words, the plurality of terminal devices may share the combination parameter #U.

In a possible implementation, the combination parameter #U may alternatively be applicable to all terminal devices in a cell.

In the foregoing implementation, the combination parameter #U may be indicated through the implementation in the foregoing embodiment. Details are not described herein again.

S440: The terminal device determines a channel eigenvalue.

Specifically, the terminal device may simultaneously perform S430 and S440, may perform S430 before S440, or may perform S440 before S430. This is not limited in this embodiment of this application.

In a possible implementation, the terminal device obtains a channel eigenvalue of a stream through a channel H' between the network device and the terminal device. For example, the terminal device performs SVD decomposition on the channel H' between the network device and the terminal device, to obtain n channel eigenvalues that are in one-to-one correspondence with n streams from a (#R)$^{th}$ stream to a (#R+n-1)$^{th}$ stream, where n ≤ min{quantity of rows of H', quantity of columns of H'}. The channel eigenvalue determined by the terminal device is the same as that determined by the network device, or H' is the same as H.

S450: The terminal device determines a correspondence between the combination parameter #U and codeword-to-layer mapping based on the combination parameter #U. Specifically, the terminal device determines the correspondence between the channel eigenvalue threshold (dB) #A and layer identifier #R and the codeword-to-layer mapping based on the following steps.

S450#A: Determine a difference between each channel eigenvalue and a maximum channel eigenvalue.

For details, refer to the descriptions of step S350#A. Details are not described herein again.

S450#B: Group the n streams into $C_n^{tmp}$ groups based on the channel eigenvalue threshold.

For details, refer to the descriptions of step S350#B. Details are not described herein again.

S450#C: Remove a group being an empty set, where a group identifier of a non-empty set is:

$$S_n = \{q^{tmp}|card(CW_q^{n,tmp}) \neq 0, where \ 0 \leq q^{tmp} \leq C_n^{tmp} - 1\} \ (4)$$

S450#D: Obtain that a quantity of to-be-mapped codewords is $C_n$. This may be understood as that n layers are mapped to the $C_n$ codewords.

$$C_n = card(S_n).$$

S450#E: Obtain each codeword-to-layer mapping relationship. A layer identifier included in a q$^{th}$ codeword is shown as follows. This may also be understood as: A mapping relationship from the q$^{th}$ codeword to a layer is shown as follows:

$$CW_q^s = \{j - s|-(S_n(q) + 1) * \#A \leq \Delta e_j \leq -S_n \ (q) * \#A, s \leq j \leq s + n - 1\}, where \ 0 \leq q \leq C_n - 1 \ (5).$$

By performing S450, the terminal device determines a correspondence between each combination parameter and codeword-to-layer mapping. In other words, one combination parameter corresponds to one time of codeword-to-layer mapping.

Table 9 shows an example listing codeword-to-layer mapping #A1 corresponding to the channel eigenvalue threshold (dB) 10 and the layer identifier 0. Table 10 shows an example listing codeword-to-layer mapping #B1 corresponding to the channel eigenvalue threshold (dB) 10 and the layer identifier 8. Based on the foregoing steps, the $3^{rd}$ column in Table 9 or Table 10: codeword-to-layer mapping 1, may be obtained. There is a correspondence between the $4^{th}$ column and the $3^{rd}$ column. The $4^{th}$ column: codeword-to-layer mapping 2, may be deduced based on the $3^{rd}$ column. For the correspondence, refer to Table 2 or Table 3. Details are not described below again.

**Table 9 Codeword-to-layer mapping #A1 corresponding to the channel eigenvalue threshold (dB) 10 and the layer identifier 0**

| Quantity of layers | Quantity of codewords | Codeword-to-layer mapping 1 | Codeword-to-layer mapping 2, where $i=0, 1, ..., V_{symb}^{layer}-1$ |
|---|---|---|---|
| 1 | 1 | $CW_0$: [0] | $x^0(i)=d^0(i)$ <br><br> $V_{symb}^{layer}=V_{symb}^0$ |
| 2 | 1 | $CW_0$: [0, 1] | $x^0(i)=d^0(2*i)$ <br> $x^1(i)=d^0(2*i+1)$ <br><br> $V_{symb}^{layer}=V_{symb}^0/2$ |
| 3 | 1 | $CW_0$: [0, 1, 2] | $x^0(i)=d^0(3*i)$ <br> $x^1(i)=d^0(3*i+1)$ <br> $x^2(i)=d^0(3*i+2)$ <br><br> $V_{symb}^{layer}=V_{symb}^0/3$ |
| 4 | 1 | $CW_0$: [0, 1, 2, 3] | $x^0(i)=d^0(4*i)$ <br> $x^1(i)=d^0(4*i+1)$ <br> $x^2(i)=d^0(4*i+2)$ <br> $x^3(i)=d^0(4*i+3)$ <br><br> $V_{symb}^{layer}=V_{symb}^0/4$ |
| 5 | 1 | $CW_0$: [0, 1, 2, 3, 4] | $x^0(i)=d^0(5*i)$ <br> $x^1(i)=d^0(5*i+1)$ <br> $x^2(i)=d^0(5*i+2)$ <br> $x^3(i)=d^0(5*i+3)$ <br> $x^4(i)=d^0(5*i+4)$ <br><br> $V_{symb}^{layer}=V_{symb}^0/5$ |
| 6 | 1 | $CW_0$: [0, 1, 2, 3, 4, 5] | $x^0(i)=d^0(6*i)$ <br> $x^1(i)=d^0(6*i+1)$ <br> $x^2(i)=d^0(6*i+2)$ <br> $x^3(i)=d^0(6*i+3)$ <br> $x^4(i)=d^0(6*i+4)$ <br> $x^5(i)=d^0(6*i+5)$ <br><br> $V_{symb}^{layer}=V_{symb}^0/6$ |
| 7 | 1 | $CW_0$: [0, 1, 2, 3, 4, 5, 6] | $x^0(i)=d^0(7*i)$ <br> $x^1(i)=d^0(7*i+1)$ <br> $x^2(i)=d^0(7*i+2)$ <br> $x^3(i)=d^0(7*i+3)$ <br> $x^4(i)=d^0(7*i+4)$ <br> $x^5(i)=d^0(7*i+5)$ <br> $x^6(i)=d^0(7*i+6)$ <br><br> $V_{symb}^{layer}=V_{symb}^0/7$ |

(continued)

| Quantity of layers | Quantity of codewords | Codeword-to-layer mapping 1 | Codeword-to-layer mapping 2, where $i=0, 1, ..., V_{symb}^{layer}-1$ |
|---|---|---|---|
| 8 | 2 | CW$_0$: [0, 1, 2, 3, 4, 5, 6]; and CW$_1$: [7] | $x^0(i)=d^0(7*i)$<br>$x^1(i)=d^0(7*i+1)$<br>$x^2(i)=d^0(7*i+2)$<br>$x^3(i)=d^0(7*i+3)$<br>$x^4(i)=d^0(7*i+4)$ $x^5(i)=d^0(7*i+5)$<br>$x^6(i)=d^0(7*i+6)$<br>$x^7(i)=d^1(i)$<br><br>$V_{symb}^{layer}=V_{symb}^0/7=V_{symb}^1$ |
| ... | ... | ... | ... |
| 32 | 4 | CW$_0$: [0, 1, 2, 3, 4, 5, 6],<br>CW$_1$: [7, 8, 9, 10, 11, 12, 13, 14, 15, 16, 17, 18, 19, 20, 21, 22];<br>CW$_2$: [23, 24, 25, 26, 27, 28, 29, 30], and CW$_3$: [31] | $x^0(i)=d^0(7*i)$<br>$x^1(i)=d^0(7*i+1)$<br>$x^2(i)=d^0(7*i+2)$<br>$x^3(i)=d^0(7*i+3)$<br>$x^4(i)=d^0(7*i+4)$<br>$x^5(i)=d°(7*i+5)$<br>$x^6(i)=d°(7*i+6)$<br>$x^7(i)=d^1(16*i)$<br>$x^8(i)=d^1(16*i+1)$<br>$x^9(i)=d^1(16*i+2)$<br>$x^{10}(i)=d^1(16*i+3)$<br>$x^{11}(i)=d^1(16*i+4)$<br>$x^{12}(i)=d^1(16*i+5)$<br>$x^{13}(i)=d^1(16*i+6)$<br>$x^{14}(i)=d^1(16*i+7)$<br>$x^{15}(i)=d^1(16*i+8)$<br>$x^{16}(i)=d^1(16*i+9)$<br>$x^{17}(i)=d^1(16*i+10)$<br>$x^{18}(i)=d^1(16*i+11)$<br>$x^{19}(i)=d^1(16*i+12)$<br>$x^{20}(i)=d^1(16*i+13)$<br>$x^{21}(i)=d^1(16*i+14)$<br>$x^{22}(i)=d^1(16*i+15)$<br>$x^{23}(i)=d^2(8*i)$<br>$x^{24}(i)=d^2(8*i+1)$<br>$x^{25}(i)=d^2(8*i+2)$<br>$x^{26}(i)=d^2(8*i+3)$<br>$x^{27}(i)=d^2(8*i+4)$<br>$x^{28}(i)=d^2(8*i+5)$<br>$x^{29}(i)=d^2(8*i+6)$<br>$x^{30}(i)=d^2(8*i+7)$<br>$x^{31}(i)=d^3(i)$<br><br>$V_{symb}^{layer}=V_{symb}^0/7=V_{symb}^1/16=V_{symb}^2/8=V_{symb}^3$ |

**Table 10 Codeword-to-layer mapping #B1 corresponding to the channel eigenvalue threshold (dB) 10 and the layer identifier 8**

| Quantity of layers | Quantity of codewords | Codeword-to-layer mapping 1 | Codeword-to-layer mapping 2, where $i=0, 1, ..., V_{symb}^{layer}-1$ |
|---|---|---|---|
| 1 | 1 | CW$_0$: [0] | $x^0(i)=d^0(i)$ $$V_{symb}^{layer}=V_{symb}^0$$ |
| 2 | 1 | CW$_0$: [0, 1] | $x^0(i)=d^0(2*i)$ $x^1(i)=d^0(2*i+1)$ $$V_{symb}^{layer}=V_{symb}^0/2$$ |
| 3 | 1 | CW$_0$: [0, 1, 2] | $x^0(i)=d^0(3*i)$ $x^1(i)=d^0(3*i+1)$ $x^2(i)=d^0(3*i+2)$ $$V_{symb}^{layer}=V_{symb}^0/3$$ |
| 4 | 1 | CW$_0$: [0, 1, 2, 3] | $x^0(i)=d^0(4*i)$ $x^1(i)=d^0(4*i+1)$ $x^2(i)=d^0(4*i+2)$ $x^3(i)=d^0(4*i+3)$ $$V_{symb}^{layer}=V_{symb}^0/4$$ |
| 5 | 1 | CW$_0$: [0, 1, 2, 3, 4] | $x^0(i)=d^0(5*i)$ $x^1(i)=d^0(5*i+1)$ $x^2(i)=d^0(5*i+2)$ $x^3(i)=d^0(5*i+3)$ $x^4(i)=d^0(5*i+4)$ $$V_{symb}^{layer}=V_{symb}^0/5$$ |
| 6 | 1 | CW$_0$: [0, 1, 2, 3, 4, 5] | $x^0(i)=d^0(6*i)$ $x^1(i)=d^0(6*i+1)$ $x^2(i)=d^0(6*i+2)$ $x^3(i)=d^0(6*i+3)$ $x^4(i)=d^0(6*i+4)$ $x^5(i)=d^0(6*i+5)$ $$V_{symb}^{layer}=V_{symb}^0/6$$ |
| 7 | 1 | CW$_0$: [0, 1, 2, 3, 4, 5, 6] | $x^0(i)=d^0(7*i)$ $x^1(i)=d^0(7*i+1)$ $x^2(i)=d^0(7*i+2)$ $x^3(i)=d^0(7*i+3)$ $x^4(i)=d^0(7*i+4)$ $x^5(i)=d^0(7*i+5)$ $x^6(i)=d^°(7*i+6)$ $$V_{symb}^{layer}=V_{symb}^0/7$$ |
| 8 | 1 | CW$_0$: [0, 1, 2, 3, 4, 5, 6]; and CW$_1$: [7] | $x^0(i)=d^0(7*i)$ $x^1(i)=d^0(7*i+1)$ $x^2(i)=d^0(7*i+2)$ $x^3(i)=d^0(7*i+3)$ $x^4(i)=d^0(7*i+4)$ $x^5(i)=d^0(7*i+5)$ |

(continued)

| Quantity of layers | Quantity of codewords | Codeword-to-layer mapping 1 | Codeword-to-layer mapping 2, where $i=0, 1, ..., V_{symb}^{layer}-1$ |
|---|---|---|---|
| | | | $x^6(i)=d^0(7*i+6)$<br>$x^7(i)=d^1(i)$<br>$V_{symb}^{layer}=V_{symb}^0/7=V_{symb}^1$ |
| ... | ... | ... | ... |
| 24 | 3 | $CW_0$: [0, 1, 2, 3, 4, 5, 6, 7, 8, 9, 10, 11, 12, 13, 14],<br>$CW_1$: [15, 16, 17, 18, 19, 20, 21, 22]; and<br>$CW_2$: [23] | $x^0(i)=d^0(15*i)$<br>$x^1(i)=d^0(15*i+1)$<br>$x^2(i)=d^0(15*i+2)$<br>$x^3(i)=d^0(15*i+3)$<br>$x^4(i)=d^0(15*i+4)$<br>$x^5(i)=d^0(15*i+5)$<br>$x^6(i)=d^0(15*i+6)$<br>$x^7(i)=d^0(15*i+7)$<br>$x^8(i)=d^0(15*i+8)$<br>$x^9(i)=d^0(15*i+9)$<br>$x^{10}(i)=d^0(15*i+10)$<br>$x^{11}(i)=d^0(15*i+11)$<br>$x^{12}(i)=d^0(15*i+12)$<br>$x^{13}(i)=d^0(15*i+13)$<br>$x^{14}(i)=d^0(15*i+14)$<br>$x^{15}(i)=d^1(8*i)$<br>$x^{16}(i)=d^1(8*i+1)$<br>$x^{17}(i)=d^1(8*i+2)$<br>$x^{18}(i)=d^1(8*i+3)$<br>$x^{19}(i)=d^1(8*i+4)$<br>$x^{20}(i)=d^1(8*i+5)$<br>$x^{21}(i)=d^1(8*i+6)$<br>$x^{22}(i)=d^1(8*i+7)$<br>$x^{23}(i)=d^2(i)$<br>$V_{symb}^{layer}=V_{symb}^0/7=V_{symb}^1/16=V_{symb}^2/8=V_{symb}^3$ |

S460: The terminal device determines the codeword-to-layer mapping based on the combination parameter #U and the correspondence.

Specifically, the terminal device determines the codeword-to-layer mapping corresponding to the combination parameter #U based on the combination parameter #U and the correspondence between the combination parameter #U and the codeword-to-layer mapping.

The correspondence between the combination parameter and the codeword-to-layer mapping that is determined by the terminal device is consistent with the correspondence between the combination parameter and the codeword-to-layer mapping that is determined by the network device. Specifically, the following manners may be used:

In a TDD system, the network device indicates the terminal device to use a channel eigenvalue of a channel stream at a reference moment as a channel eigenvalue for determining codeword-to-layer mapping. In this way, it can be ensured that a channel eigenvalue used by the terminal device is consistent with a channel eigenvalue used by the network device.

During downlink transmission in an FDD system, the terminal device feeds back a channel eigenvalue of each stream to the network device. In this way, it can be ensured that a channel eigenvalue used by the terminal device is consistent with a channel eigenvalue used by the network device.

During uplink transmission in the FDD system, the terminal device may use codeword-to-layer mapping that is the same as that in the downlink transmission in the FDD system.

Optionally, the terminal device sends capability indication information to the network device. The capability indication information indicates whether the terminal device supports dynamic codeword-to-layer mapping.

Specifically, if the capability indication information indicates that the terminal device does not support the dynamic codeword-to-layer mapping, the network device maintains existing codeword-to-layer mapping with the terminal device. If the capability indication information indicates that the terminal device supports the dynamic codeword-to-layer mapping, the network device maintains the dynamic codeword-to-layer mapping with the terminal device by using the foregoing technical solution.

Optionally, the terminal device sends, to the network device, indication information indicating whether the combination parameter #U is applicable or needs to be updated. Alternatively, after receiving the combination parameter #U sent by the network device, the terminal device sends a new recommended combination parameter value #Z to the network device. The recommended combination parameter value or the indication information indicating whether the combination parameter #U is applicable or needs to be updated may be sent through the foregoing implementation.

Specifically, in this embodiment of this application, a plurality of streams with similar channel eigenvalues are mapped to a same codeword by configuring the channel eigenvalue threshold, and an allocation result is that a maximum difference between channel eigenvalues of any two streams in a same codeword does not exceed the configured channel eigenvalue threshold. In this way, in this embodiment of this application, an MCS value configured based on a codeword may be close to an MCS value of each stream corresponding to the codeword, so that performance losses of a MIMO system can be reduced. In addition, the layer identifier is configured based on scheduling information, and a codeword-to-layer mapping relationship is adjusted based on the layer identifier, to improve performance of the MIMO system.

Based on the foregoing technical solution, in this embodiment of this application, any quantity of transport layers may be supported, and a dynamic codeword-to-layer mapping relationship may be supported. Different terminal devices may flexibly and dynamically adjust the codeword-to-layer mapping relationship based on the combination parameters at different moments. When a channel difference between different terminal devices is large or a channel of a terminal device differs greatly at different moments, compared with a fixed layer mapping relationship, in this embodiment of this application, a system capacity can be increased. In this embodiment of this application, a balance between capacity performance and signaling overheads of the MIMO system may be achieved by changing a value of the combination parameter.

In addition, the terminal device may determine a correspondence between the combination parameter and a layer mapping relationship based on the combination parameter. The correspondence does not need to be indicated by the network device. The network device needs to only dynamically indicate the combination parameter. Compared with indirect dynamic indication of the codeword-to-layer mapping, in this embodiment of this application, signaling overheads can be effectively reduced. In this embodiment of this application, a plurality of streams with similar channel eigenvalues are mapped to a same codeword, and a plurality of streams with different channel eigenvalues are mapped to different codewords. In this way, signaling overheads can be effectively reduced. A larger quantity of codewords indicates higher signaling overheads. When signaling overheads are the same, in this embodiment of this application, a system capacity of the MIMO system can be effectively increased.

In a multi-user MIMO scenario, due to impact of interference, some terminal devices schedule first n streams with maximum channel eigenvalues, and some terminal devices schedule n streams with intermediate channel eigenvalues. If a difference between the channel eigenvalues of the first n streams differs greatly from a difference between the channel eigenvalues of the intermediate n streams, all terminal devices use codeword-to-layer mapping corresponding to the first n streams or codeword-to-layer mapping corresponding to the intermediate n streams. This reduces system performance.

Therefore, in this embodiment of this application, a layer identifier is added to indicate a location for transmission of the n streams in L streams. This embodiment of this application can support dynamic adjustment of layer identifier-based codeword-to-layer mapping of different terminal devices at different moments. In this embodiment of this application, the layer identifier may be determined based on a scheduling result of a stream of the terminal device, to obtain codeword-to-layer mapping that matches the scheduling result, so as to increase a system capacity.

The layer identifier shown in FIG. 4 may also become an independent first indication parameter. For example, one layer identifier corresponds to one codeword-to-layer mapping relationship. In this case, the network device can flexibly indicate the layer identifier based on different channel conditions, to dynamically adjust the codeword-to-layer mapping. For specific content, refer to the foregoing descriptions. Details are not described herein again.

In the descriptions of the method #400 in this embodiment of this application, the channel eigenvalue threshold and the layer identifier are the first indication parameter. However, the first indication parameter may alternatively be a signal power threshold and a layer identifier, a signal energy threshold and a layer identifier, a reference signal received power threshold and a layer identifier, a signal-to-noise ratio threshold and a layer identifier, or a signal to interference plus noise ratio threshold and a layer identifier. For example, the channel eigenvalue threshold and the layer identifier in the solution may be replaced with the signal power threshold and the layer identifier, the signal energy threshold and the layer identifier, the reference signal received power threshold and the layer identifier, the signal-to-noise ratio threshold and the layer identifier, or the signal to interference plus noise ratio threshold and the layer identifier, and the channel eigenvalue and the layer identifier are replaced with signal power and the layer identifier, signal energy and the layer identifier, reference signal received power and the layer identifier, a signal-to-noise ratio and the layer identifier, or a signal to interference plus noise ratio and the layer identifier. Therefore, for the technical solution related to the first indication parameter mentioned above, refer to the content shown in the method #400. Details are not described in this embodiment of this application.

As mentioned above, the codeword-to-layer mapping may alternatively include a specific row or column in a codeword-to-layer mapping table. Therefore, that there is the correspondence between the first indication parameter and the codeword-to-layer mapping may be understood as follows: There is a correspondence between the first indication parameter and the specific row or column in the codeword-to-layer mapping table (where the mapping table is Table 9). For example, in Table 9, the channel eigenvalue threshold (dB) 10 and the layer identifier 0 correspond to the 3$^{rd}$ row, and the channel eigenvalue threshold (dB) 10 and the layer identifier 8 correspond to the 4$^{th}$ row. For descriptions of the correspondence between the first indication parameter and the specific row or column in the codeword-to-layer mapping table, refer to the content. The content is merely used as an example for understanding.

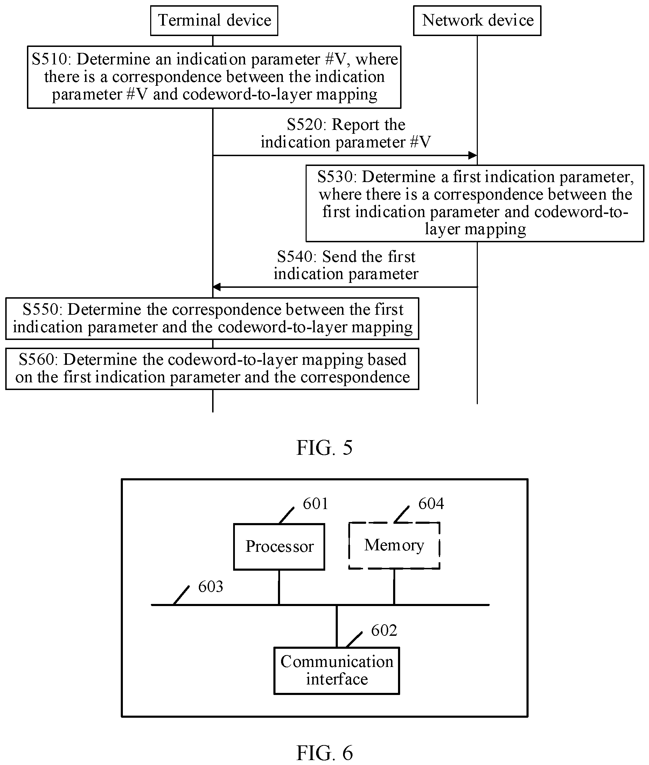

FIG. 5 is an interaction diagram of yet another communication method according to an embodiment of this application. The method #500 includes the following steps.

S510: A terminal device determines an indication parameter #V, where there is a correspondence between the indication parameter #V and codeword-to-layer mapping.

Specifically, the terminal device selects the indication parameter #V (where the indication parameter #V may be understood as an indication parameter recommended by the terminal device) from candidate values of indication parameters based on a criterion #Q, and reports the indication parameter #V to a network device.

For example, the criterion #Q may mean that the terminal device has optimal performance, minimum signaling overheads, or the like. There is the correspondence between the indication parameter #V and the codeword-to-layer mapping. For example, the candidate values of the indication parameters are {#Y, #Z, #V}. An indication parameter #Y corresponds to codeword-to-layer mapping #A1, an indication parameter #Z corresponds to codeword-to-layer mapping #B1, and the indication parameter #V corresponds to codeword-to-layer mapping #C1. For details, refer to the foregoing content. Details are not described herein again.

S520: The terminal device reports the indication parameter #V to the network device.

Correspondingly, the network device receives the indication parameter #V

In a possible implementation, the terminal device reports the indication parameter #V in a CSI measurement feedback.

Specifically, the network device sends a CSI-RS to the terminal device, and the terminal device obtains a channel through channel estimation. The terminal device selects the indication parameter #V from the candidate values of the indication parameters based on the criterion #Q, to report the indication parameter #V to the network device. After determining the indication parameter #V, the terminal device determines, based on the indication parameter #V and correspondences between the indication parameters and codeword-to-layer mapping, the codeword-to-layer mapping corresponding to the indication parameter #V Then, the terminal device determines a rank indicator (rank indicator, RI) and a precoding matrix (precoding matrix indicator, PMI), and determines a channel quality indicator (channel quality indicator, CQI).

The terminal device may report one or more CQIs on each codeword. This can assist the network device in determining codeword-to-layer mapping during scheduling or data transmission, to improve communication performance. The terminal device may report the indication parameter #V to the network device during CSI feedback. In addition, the terminal device may report the RI, the PMI, the CQI, and the like to the network device.

In a possible implementation, the terminal device reports the indication parameter #V on a physical uplink control channel (physical uplink control channel, PUCCH) or a physical uplink shared channel (physical uplink shared channel, PUSCH).

S530: A network device determines a first indication parameter, where there is a correspondence between the first indication parameter and codeword-to-layer mapping.

Specifically, the network device selects the first indication parameter from the candidate values of the indication parameters.

Optionally, the network device may determine the first indication parameter based on the indication parameter #V reported by the terminal device. The first indication parameter may be the same as the indication parameter #V, or may be different from the indication parameter #V.

S540: The network device sends the first indication parameter to the terminal device.

Correspondingly, the terminal device receives the first indication parameter.

Specifically, the network device may send the first indication parameter to the terminal device through higher layer signaling or physical layer signaling. The network device may indicate the first indication parameter through an implementation in the foregoing embodiment. Details are not described herein again.

In a possible implementation, the first indication parameter is applicable to one terminal device. In other words, the terminal device may use the first indication parameter.

In a possible implementation, the first indication parameter is applicable to a plurality of terminal devices. In other words, the plurality of terminal devices may share the first indication parameter.

In a possible implementation, the first indication parameter is applicable to all terminal devices in a cell.

In the foregoing implementation, the first indication parameter may be indicated through the implementation in the foregoing embodiment. Details are not described herein again.

S550: The terminal device determines the correspondence between the first indication parameter and the codeword-to-layer mapping.

Specifically, the terminal device may determine the correspondence in the three manners in the foregoing embodiment. Details are not described herein again.

S560: The terminal device determines the codeword-to-layer mapping based on the first indication parameter and the correspondence.

For details, refer to the descriptions of step S230. Details are not described herein again.

Optionally, the method # 500 may further include:

S570: The terminal device sends first indication information or second indication information to the network device.

Specifically, the first indication information indicates whether the first indication parameter is applicable or needs to be updated, and the second indication information includes the indication parameter #Z recommended by the terminal device.

In a possible example, after receiving the first indication parameter, the terminal device determines, based on detection performance of a DMRS, whether the first indication parameter is appropriate. The terminal device may send, to the network device through joint coding with a NACK mechanism (for example, NACK+applicable or NACK+inapplicable), first indication information indicating whether the first indication parameter is applicable or needs to be updated, or may send, to the network device through independent coding, the first indication information indicating whether the first indication parameter is applicable or needs to be updated.

In another possible example, after receiving the first indication parameter, the terminal device sends, to the network device through joint coding with a negative acknowledgment mechanism (for example, NACK+#Z), the second indication information including the recommended indication parameter #Z, or may send, to the network device through independent coding, the second indication information including the recommended indication parameter #Z.

The terminal device reports the recommended indication parameter #Z or the indication information to the network device. In this embodiment of this application, the network device can determine an appropriate first indication parameter based on an indication parameter or indication information that is sent by the terminal device. In addition, the indication parameter or the indication information that is reported by the terminal device to the network device can affect a decision of the network device on codeword-to-layer mapping during data transmission. Then, the network device can determine the appropriate first indication parameter, to improve communication performance.

Optionally, the method # 500 may further include:

S580: The network device sends a third indication parameter to the terminal device.

Specifically, the first indication information or the second indication information reported by the terminal device to the network device can affect a decision of the network device on codeword-to-layer mapping during data transmission. Specifically, the network device can determine an appropriate indication parameter (for example, the third indication parameter) based on the first indication information or the second indication information sent by the terminal device, to improve communication performance.

In this embodiment of this application, the method #500 may include S510 to S580, may include S510 to S570, may include S530 to S580, may include S510 to S560, or may include S530 to S570, or the like. This is not limited in this embodiment of this application.

In embodiments of this application, the methods shown in FIG. 2, FIG. 3, FIG. 4, and FIG. 5 may be applied not only to data transmission, but also to CSI feedback.

Specifically, a network device sends a CSI-RS to a terminal device, and the terminal device obtains a channel through channel estimation. The network device determines a first indication parameter, where there is a correspondence between the first indication parameter and codeword-to-layer mapping. The network device sends the first indication parameter to the terminal device. After determining the first indication parameter, the terminal device determines, based on the first indication parameter and the correspondence between the first indication parameter and the codeword-to-layer mapping, the codeword-to-layer mapping corresponding to the first indication parameter. Then, the terminal device determines a rank indicator (rank indicator, RI) and a precoding matrix (precoding matrix indicator, PMI), and determines a channel quality indicator (channel quality indicator, CQI).

The terminal device may report one or more CQIs on each codeword. This can assist the network device in determining codeword-to-layer mapping during scheduling or data transmission, to improve communication performance. The terminal device may report a second indication parameter to the network device during CSI feedback. The terminal device may report the RI, the PMI, the CQI, and the like to the network device. In this way, this embodiment of this application can assist the network device in determining codeword-to-layer mapping during data transmission, to improve communication performance.

The foregoing describes the method embodiments in embodiments of this application, and the following describes corresponding apparatus embodiments.

To implement functions in the methods provided in the foregoing embodiments of this application, the terminal and the network device each may include a hardware structure and/or a software module, to implement the functions in a form of the hardware structure, the software module, or a combination of the hardware structure and the software module. Whether a specific function in the foregoing functions is performed by the hardware structure, the software module, or the combination of the hardware structure and the software module depends on a specific application and a design constraint condition of the technical solutions.

FIG. 6 is a diagram of a communication apparatus 600 according to an embodiment of this application. The communication apparatus 600 includes a processor 601 and a communication interface 602. The processor 601 and the communication interface 602 are connected to each other through a bus 603. The communication apparatus 600 shown in FIG. 6 may be a network device, or may be a terminal device.

Optionally, the communication apparatus 600 further includes a memory 604.

The memory 604 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 604 is configured to store related instructions and related data.

The processor 601 may be one or more central processing units (central processing units, CPUs). When the processor 601 is one CPU, the CPU may be a single-core CPU or a multi-core CPU.

When the communication apparatus 600 is a network device, the processor 601 in the communication apparatus 600 is configured to read a computer program or instructions stored in the memory 604. For example, the following operations are performed:

determining a first indication parameter, where there is a correspondence between the first indication parameter and codeword-to-layer mapping; and sending the first indication parameter.

For another example, the following operations may be performed:

determining a correspondence between a first indication parameter and codeword-to-layer mapping; and sending the correspondence.

The foregoing content is merely used as an example for description. When the communication apparatus 600 is a network device, the communication apparatus 600 is responsible for performing the methods or steps related to the network device in the foregoing method embodiments.

When the communication apparatus 600 is a terminal device, the processor 601 in the communication apparatus 600 is configured to read program code stored in the memory 604. For example, the following operations are performed: receiving a first indication parameter, where there is a correspondence between the first indication parameter and codeword-to-layer mapping; determining the correspondence; and determining the codeword-to-layer mapping based on the first indication parameter and the correspondence.

The foregoing content is merely used as an example for description. When the communication apparatus 600 is a terminal device, the communication apparatus 600 is responsible for performing the methods or steps related to the terminal device in the foregoing method embodiments.

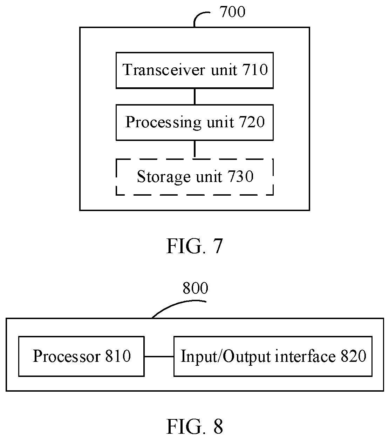

The foregoing descriptions are merely an example for description. For specific content, refer to the content shown in the foregoing method embodiments. In addition, for implementation of each operation in FIG. 7, refer to corresponding descriptions in the method embodiments shown in FIG. 2 to FIG. 5.

FIG. 7 is a diagram of another communication apparatus 700 according to an embodiment of this application. The communication apparatus 700 may be used in a network device, and may be configured to implement the method in the foregoing embodiment. The communication apparatus 700 includes a transceiver unit 710 and a processing unit 720. The following describes the transceiver unit 710 and the processing unit 720 by using examples.

When the communication apparatus 700 is a network device, for example, the transceiver unit 710 is configured to send a first indication parameter. The processing unit 720 is configured to: determine the first indication parameter, and determine a correspondence between the first indication parameter and codeword-to-layer mapping. The transceiver unit 710 may be further configured to receive indication information or a second indication parameter that is sent by a terminal device.

The foregoing content is merely used as an example for description. When the communication apparatus 700 is a network device, the communication apparatus 700 is responsible for performing the methods or steps related to the network device in the foregoing method embodiments.

In a possible implementation, the communication apparatus 700 further includes a storage unit 730. The storage unit 730 is configured to store a program or code used to perform the foregoing method.

In addition, for implementation of each operation in FIG. 7, refer to corresponding descriptions of the method shown in the foregoing embodiment. Details are not described herein again.

The communication apparatus 700 shown in FIG. 7 may also be used in a terminal device, and may be configured to implement the method in the foregoing embodiment. When the communication apparatus 700 is a terminal device, for example, the transceiver unit 710 is configured to receive a first indication parameter. The processing unit 720 is configured to determine a correspondence between the first indication parameter and codeword-to-layer mapping, and is further configured to determine the codeword-to-layer mapping based on the first indication parameter and the correspondence.

The foregoing content is merely used as an example for description. When the communication apparatus 700 is a terminal device, the communication apparatus 700 is responsible for performing the methods or steps related to the terminal device in the foregoing method embodiments.

The apparatus embodiments shown in FIG. 6 and FIG. 7 are used to implement the content described in the method embodiments shown in FIG. 2 to FIG. 5. Therefore, for specific execution steps and methods of the apparatuses shown in FIG. 6 and FIG. 7, refer to the content described in the foregoing method embodiments.

FIG. 8 is a diagram of still another communication apparatus 800 according to an embodiment of this application. The communication apparatus 800 may be configured to implement functions of the first communication apparatus and the second communication apparatus in the foregoing methods. The communication apparatus 800 may be a communication apparatus or a chip in the communication apparatus.

The communication apparatus 800 includes an input/output interface 820 and a processor 810. The input/output interface 820 may be an input/output circuit. The processor 810 may be a signal processor, a chip, or another integrated circuit that can implement the method in this application. The input/output interface 820 is configured to input or output a signal or data.

For example, when the communication apparatus 800 is the first communication apparatus, the input/output interface 820 is configured to receive a first indication parameter. For example, when the communication apparatus 800 is the second communication apparatus, the input/output interface 820 is configured to send a first indication parameter. The processor 810 is configured to perform a part or all of the steps of any method provided in embodiments of this application.

For example, when the communication apparatus 800 is the first communication apparatus, the communication apparatus 800 is configured to perform the steps performed by the first communication apparatus in the possible implementations in the foregoing method embodiments. For example, the processor 810 is configured to determine codeword-to-layer mapping corresponding to the first indication parameter. For example, when the communication apparatus 800 is the second communication apparatus, the communication apparatus 800 is configured to perform the steps performed by the second communication apparatus in the possible implementations in the foregoing method embodiments. For example, the processor 810 is configured to determine a first indication parameter.

In a possible implementation, the processor 810 executes instructions stored in a memory, to implement the functions implemented by the first communication apparatus, the second communication apparatus, or the terminal.

Optionally, the communication apparatus 800 further includes the memory.

Optionally, the processor and the memory are integrated together.

Optionally, the memory is outside the communication apparatus 800.

In a possible implementation, the processor 810 may be a logic circuit, and the processor 810 inputs/outputs a message or signaling through the input/output interface 820. The logic circuit may be a signal processor, a chip, or another integrated circuit that can implement the method in embodiments of this application.

The foregoing descriptions of the apparatus in FIG. 8 is merely an example for description. The apparatus can be configured to perform the method in the foregoing embodiments. For specific content, refer to the descriptions of the foregoing method embodiments. Details are not described herein again.

An embodiment of this application further provides a chip, including a processor, configured to invoke, from a memory, instructions stored in the memory and run the instructions, to enable a communication device on which the chip is mounted to perform the method in the foregoing examples.

An embodiment of this application further provides another chip, including: an input interface, an output interface, and a processor. The input interface, the output interface, and the processor are connected through an internal connection path. The processor is configured to execute code in a memory. When the code is executed, the processor is configured to perform the method in the foregoing examples. Optionally, the chip further includes the memory. The memory is configured to store a computer program or code.

An embodiment of this application further provides a processor, coupled to a memory, and configured to perform the method and the function related to the first communication apparatus or the second communication apparatus in any one of the foregoing embodiments.

Another embodiment of this application provides a computer program product including instructions. When the computer program product runs on a computer, the method in the foregoing embodiments is implemented.

An embodiment of this application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

In the descriptions of embodiments of this application, the term "a plurality of" means two or more than two unless otherwise specified. "At least one item (piece) of the following" or a similar expression thereof means any combination of these items, including a singular item (piece) or any combination of plural items (pieces). For example, at least one of a, b, or c may indicate: a; b; c; a and b; a and c; b and c; or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" are used to represent an example, an illustration, or a description.

Any embodiment or design scheme described as an "example" or "for example" in embodiments of this application should not be explained as being more preferred or having more advantages than another embodiment or design scheme. Exactly, use of the words such as "example" or "for example" are intended to present a related concept in a specific manner for ease of understanding.

Unless otherwise specified, "/" in the descriptions of embodiments of this application represents an "or" relationship between associated objects. For example, A/B may represent A or B. In this application, "and/or" represents only an association relationship for describing associated objects and represents that three relationships may exist. For example, A and/or B may represent the following three cases: Only A exists, both A and B exist, and only B exists. A and B may be singular or plural.

It should be understood that "one embodiment" or "an embodiment" mentioned throughout the specification means that particular features, structures, or characteristics related to the embodiment are included in at least one embodiment of this application.

Therefore, "in one embodiment" or "in an embodiment" that appears throughput the whole specification does not necessarily mean a same embodiment. In addition, these particular features, structures, or characteristics may be combined in one or more embodiments in any proper manner.

Sequence numbers of the foregoing processes do not mean execution sequences in embodiments of this application. The execution sequences of the processes should be determined based on functions and internal logic of the processes, and should not be construed as any limitation on implementation processes of embodiments of this application.

It may be understood that an "embodiment" mentioned throughout the specification means that particular features, structures, or characteristics related to the embodiment are included in at least one embodiment of this application.

Therefore, embodiments in the entire specification do not necessarily refer to a same embodiment. In addition, these particular features, structures, or characteristics may be combined in one or more embodiments in any proper manner.

It may be understood that sequence numbers of the foregoing processes do not mean execution sequences in embodiments of this application. The execution sequences of the processes should be determined based on functions and internal logic of the processes, and should not be construed as any limitation on implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

It may be clearly understood by a person skilled in the art that, for convenient and brief description, for detailed working processes of the foregoing system, apparatus, and unit, refer to the corresponding processes in the foregoing method embodiments. Details are not described herein again.

In the several embodiments provided in this application, it should be understood that the disclosed systems, apparatuses, and methods may be implemented in other manners. For example, the foregoing apparatus embodiments are merely examples. For example, the unit division is merely logical function division and may be other division during actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of the embodiments.

In addition, the functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or a part of the steps of the methods in embodiments of this application. The foregoing storage medium includes various media that can store program code, for example, a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

**Claims**

1. A communication method, comprising:

   receiving, by a first communication apparatus, a first indication parameter, wherein there is a correspondence between the first indication parameter and first codeword-to-layer mapping; and
   determining, by the first communication apparatus, the first codeword-to-layer mapping based on the first indication parameter.

2. The method according to claim 1, wherein the first indication parameter comprises at least one of the following: a channel feature, a communication apparatus capability, or scheduling information.

3. The method according to claim 2, wherein the channel feature comprises at least one of the following:

   a channel eigenvalue threshold, a signal-to-noise ratio threshold, a quantity of antenna ports, a scenario, a location, a channel path feature, or a channel latency feature;
   the communication apparatus capability comprises at least one of the following:

      a maximum quantity of supported codewords, a maximum quantity of supported layers, or whether dynamic codeword-to-layer mapping is supported; or
      the scheduling information comprises at least one of the following:
      a modulation scheme, a code rate, a transport block size, or a layer identifier.

4. The method according to any one of claims 1 to 3, wherein the method further comprises: sending, by the first communication apparatus, a second indication parameter, wherein there is a correspondence between the second indication parameter and second codeword-to-layer mapping.

5. The method according to any one of claims 1 to 4, wherein the determining, by the first communication apparatus, the first codeword-to-layer mapping based on the first indication parameter comprises:

   determining, by the first communication apparatus, the correspondence between the first indication parameter and the first codeword-to-layer mapping based on the first indication parameter; and
   determining, by the first communication apparatus, the first codeword-to-layer mapping based on the first indication parameter and the correspondence between the first indication parameter and the first codeword-to-layer mapping; or
   receiving, by the first communication apparatus, the correspondence between the first indication parameter and the first codeword-to-layer mapping; and

determining, by the first communication apparatus, the first codeword-to-layer mapping based on the first indication parameter and the correspondence between the first indication parameter and the first codeword-to-layer mapping; or

determining, by the first communication apparatus, the first codeword-to-layer mapping based on the first indication parameter and the correspondence between the first indication parameter and the first codeword-to-layer mapping, wherein the correspondence between the first indication parameter and the first codeword-to-layer mapping is predefined.

6. The method according to any one of claims 1 to 5, wherein after the receiving, by a first communication apparatus, a first indication parameter, the method further comprises:

sending, by the first communication apparatus, first indication information, wherein the first indication information indicates whether the first indication parameter is applicable or whether the first indication parameter needs to be updated.

7. The method according to any one of claims 1 to 6, wherein

indication information of the first indication parameter and indication information of the correspondence between the first indication parameter and the first codeword-to-layer mapping are user-level indication information, user group-level indication information, or cell-level indication information;

indication information of the first indication parameter is user-level indication information, user group-level indication information, or cell-level indication information; or

indication information of the correspondence between the first indication parameter and the first codeword-to-layer mapping is user-level indication information, user group-level indication information, or cell-level indication information.

8. The method according to any one of claims 1 to 7, wherein the receiving, by a first communication apparatus, a first indication parameter comprises:

receiving, by the first communication apparatus, the first indication parameter sent by a second communication apparatus.

9. A communication method, comprising:

determining, by a second communication apparatus, a first indication parameter, wherein there is a correspondence between the first indication parameter and first codeword-to-layer mapping; and

sending, by the second communication apparatus, the first indication parameter to a first communication apparatus.

10. The method according to claim 9, wherein the first indication parameter comprises at least one of the following:
a channel feature, a communication apparatus capability, or scheduling information.

11. The method according to claim 10, wherein the channel feature comprises at least one of the following:

a channel eigenvalue threshold, a signal-to-noise ratio threshold, a quantity of antenna ports, a scenario, a location, a channel path feature, or a channel latency feature;

the communication apparatus capability comprises at least one of the following:

a maximum quantity of supported codewords, a maximum quantity of supported layers, or whether dynamic codeword-to-layer mapping is supported; or

the scheduling information comprises at least one of the following:

a modulation scheme, a code rate, a transport block size, or a layer identifier.

12. The method according to any one of claims 9 to 11, wherein the method further comprises:
sending, by the second communication apparatus, the correspondence between the first indication parameter and the first codeword-to-layer mapping to the first communication apparatus.

13. The method according to any one of claims 9 to 12, wherein the method further comprises:
receiving, by the second communication apparatus, a second indication parameter sent by the first communication apparatus, wherein there is a correspondence between the second indication parameter and second codeword-to-layer mapping.

14. The method according to any one of claims 9 to 13, wherein after the sending, by the second communication apparatus, the first indication parameter to a first communication apparatus, the method further comprises:
receiving, by the second communication apparatus, first indication information sent by the first communication apparatus, wherein the first indication information indicates whether the first indication parameter is applicable or whether the first indication parameter needs to be updated.

15. The method according to any one of claims 9 to 14, wherein

indication information of the first indication parameter and indication information of the correspondence between the first indication parameter and the first codeword-to-layer mapping are user-level indication information, user group-level indication information, or cell-level indication information;
indication information of the first indication parameter is user-level indication information, user group-level indication information, or cell-level indication information; or
indication information of the correspondence between the first indication parameter and the first codeword-to-layer mapping is user-level indication information, user group-level indication information, or cell-level indication information.

16. A communication apparatus, comprising:

a transceiver unit, configured to receive a first indication parameter, wherein there is a correspondence between the first indication parameter and first codeword-to-layer mapping; and
a processing unit, configured to determine the first codeword-to-layer mapping based on the first indication parameter.

17. The apparatus according to claim 16, wherein the first indication parameter comprises at least one of the following: a channel feature, a communication apparatus capability, or scheduling information.

18. The apparatus according to claim 17, wherein the channel feature comprises at least one of the following:

a channel eigenvalue threshold, a signal-to-noise ratio threshold, a quantity of antenna ports, a scenario, a location, a channel path feature, or a channel latency feature;
the communication apparatus capability comprises at least one of the following:

a maximum quantity of supported codewords, a maximum quantity of supported layers, or whether dynamic codeword-to-layer mapping is supported; or
the scheduling information comprises at least one of the following:
a modulation scheme, a code rate, a transport block size, or a layer identifier.

19. The apparatus according to any one of claims 16 to 18, wherein the transceiver unit is further configured to send a second indication parameter, wherein there is a correspondence between the second indication parameter and second codeword-to-layer mapping.

20. The apparatus according to any one of claims 16 to 19, wherein

the processing unit is configured to: determine the correspondence between the first indication parameter and the first codeword-to-layer mapping based on the first indication parameter; and
the processing unit is further configured to determine the first codeword-to-layer mapping based on the first indication parameter and the correspondence between the first indication parameter and the first codeword-to-layer mapping; or
the transceiver unit is further configured to receive the correspondence between the first indication parameter and the first codeword-to-layer mapping; and
the processing unit is further configured to determine the first codeword-to-layer mapping based on the first indication parameter and the correspondence between the first indication parameter and the first codeword-to-layer mapping; or
the processing unit is further configured to determine the first codeword-to-layer mapping based on the first indication parameter and the correspondence between the first indication parameter and the first codeword-to-layer mapping, wherein
the correspondence between the first indication parameter and the first codeword-to-layer mapping is predefined.

21. The apparatus according to any one of claims 16 to 20, wherein
the transceiver unit is further configured to send first indication information, wherein the first indication information indicates whether the first indication parameter is applicable or whether the first indication parameter needs to be updated.

22. The apparatus according to any one of claims 16 to 21, wherein

indication information of the first indication parameter and indication information of the correspondence between the first indication parameter and the first codeword-to-layer mapping are user-level indication information, user group-level indication information, or cell-level indication information;
indication information of the first indication parameter is user-level indication information, user group-level indication information, or cell-level indication information; or
indication information of the correspondence between the first indication parameter and the first codeword-to-layer mapping is user-level indication information, user group-level indication information, or cell-level indication information.

23. The apparatus according to any one of claims 16 to 22, wherein the transceiver unit is further configured to receive the first indication parameter sent by a second communication apparatus.

24. A communication apparatus, comprising:

a processing unit, configured to determine a first indication parameter, wherein there is a correspondence between the first indication parameter and first codeword-to-layer mapping; and
a transceiver unit, configured to send the first indication parameter to a first communication apparatus.

25. The apparatus according to claim 24, wherein the first indication parameter comprises at least one of the following: a channel feature, a communication apparatus capability, or scheduling information.

26. The apparatus according to claim 25, wherein the channel feature comprises at least one of the following:

a channel eigenvalue threshold, a signal-to-noise ratio threshold, a quantity of antenna ports, a scenario, a location, a channel path feature, or a channel latency feature;
the communication apparatus capability comprises at least one of the following:

a maximum quantity of supported codewords, a maximum quantity of supported layers, or whether dynamic codeword-to-layer mapping is supported; or
the scheduling information comprises at least one of the following:
a modulation scheme, a code rate, a transport block size, or a layer identifier.

27. The apparatus according to any one of claims 24 to 26, wherein the transceiver unit is further configured to send, to the first communication apparatus, the correspondence between the first indication parameter and the first codeword-to-layer mapping.

28. The apparatus according to any one of claims 24 to 27, wherein the transceiver unit is further configured to receive a second indication parameter sent by the first communication apparatus, wherein there is a correspondence between the second indication parameter and second codeword-to-layer mapping.

29. The apparatus according to any one of claims 24 to 28, wherein
the transceiver unit is further configured to receive first indication information sent by the first communication apparatus, wherein the first indication information indicates whether the first indication parameter is applicable or whether the first indication parameter needs to be updated.

30. The apparatus according to any one of claims 24 to 29, wherein

indication information of the first indication parameter and indication information of the correspondence between the first indication parameter and the first codeword-to-layer mapping are user-level indication information, user group-level indication information, or cell-level indication information;

indication information of the first indication parameter is user-level indication information, user group-level indication information, or cell-level indication information; or

indication information of the correspondence between the first indication parameter and the first codeword-to-layer mapping is user-level indication information, user group-level indication information, or cell-level indication information.

31. A communication apparatus, comprising a processor, wherein the processor is coupled to a memory, and the processor is configured to execute a computer program or instructions, to enable the communication apparatus to perform the method according to any one of claims 1 to 15.

32. A communication apparatus, comprising a logic circuit and an input/output interface, wherein the logic circuit is configured to execute a computer program or instructions, to enable the communication apparatus to perform the method according to any one of claims 1 to 15.

33. A computer-readable storage medium, comprising a computer program or instructions, wherein when the computer program or the instructions are run on a computer, the computer is enabled to perform the method according to any one of claims 1 to 15.

34. A computer program product, comprising instructions, wherein when the instructions are run on a computer, the computer is enabled to perform the method according to any one of claims 1 to 15.

Network
device

Terminal
device

FIG. 1

| First communication apparatus | | Second communication apparatus |
|---|---|---|

S210: Determine a first indication
parameter, where there is a correspondence
between the first indication parameter and
first codeword-to-layer mapping

S220: Send the first
indication parameter

S230: Determine the first codeword-to-
layer mapping based on the first
indication parameter

FIG. 2

```
┌─────────────────┐                              ┌─────────────────┐
│ Terminal device │                              │ Network device  │
└─────────────────┘                              └─────────────────┘
        │                                                 │
        │                              ┌──────────────────────────────────┐
        │                              │ S310: Determine a channel        │
        │                              │ eigenvalue                       │
        │                              └──────────────────────────────────┘
        │                              ┌──────────────────────────────────┐
        │                              │ S320: Determine a channel        │
        │                              │ eigenvalue threshold #A          │
        │                              └──────────────────────────────────┘
        │        S330: Send the channel eigenvalue threshold #A           │
        │ ◄───────────────────────────────────────────────────────────── │
┌──────────────────────────────────────────────┐                         │
│ S340: Determine a correspondence between the  │                         │
│ channel eigenvalue threshold #A and codeword- │                         │
│ to-layer mapping                              │                         │
└──────────────────────────────────────────────┘                         │
┌──────────────────────────────────────────────┐                         │
│ S350: Determine the codeword-to-layer mapping │                         │
│ based on the channel eigenvalue threshold #A  │                         │
│ and the correspondence                        │                         │
└──────────────────────────────────────────────┘                         │
        │                                                 │
```

FIG. 3

```
┌─────────────────┐                              ┌─────────────────┐
│ Terminal device │                              │ Network device  │
└─────────────────┘                              └─────────────────┘
        │                                                 │
        │                              ┌──────────────────────────────────┐
        │                              │ S410: Determine a channel        │
        │                              │ eigenvalue                       │
        │                              └──────────────────────────────────┘
        │                              ┌──────────────────────────────────┐
        │                              │ S420: Determine a combination    │
        │                              │ parameter #U                     │
        │                              └──────────────────────────────────┘
        │          S430: Send the combination parameter #U                │
        │ ◄───────────────────────────────────────────────────────────── │
┌──────────────────────────────────────────────┐                         │
│ S440: Determine a correspondence between      │                         │
│ the combination parameter #U and              │                         │
│ codeword-to-layer mapping                     │                         │
└──────────────────────────────────────────────┘                         │
┌──────────────────────────────────────────────┐                         │
│ S450: Determine the codeword-to-layer         │                         │
│ mapping based on the combination              │                         │
│ parameter #U and the correspondence           │                         │
└──────────────────────────────────────────────┘                         │
        │                                                 │
```

FIG. 4

| Terminal device | | Network device |
|---|---|---|

S510: Determine an indication parameter #V, where there is a correspondence between the indication parameter #V and codeword-to-layer mapping

S520: Report the indication parameter #V

S530: Determine a first indication parameter, where there is a correspondence between the first indication parameter and codeword-to-layer mapping

S540: Send the first indication parameter

S550: Determine the correspondence between the first indication parameter and the codeword-to-layer mapping

S560: Determine the codeword-to-layer mapping based on the first indication parameter and the correspondence

FIG. 5

601 Processor

604 Memory

603

602 Communication interface

FIG. 6

700

| Transceiver unit 710 |
| Processing unit 720 |
| Storage unit 730 |

**FIG. 7**

800

| Processor 810 | Input/Output interface 820 |

**FIG. 8**

## INTERNATIONAL SEARCH REPORT

International application No.

**PCT/CN2023/089749**

| A. | CLASSIFICATION OF SUBJECT MATTER |
|---|---|

H04W72/04(2023.01)i

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

VCN, DWPI, ENTXT, CNKI, 3GPP, IEEE: 映射, 码字, 层, 动态, 对应, 相关, 关系, 不同, 指示, 信道, 特征, codeword, CW, layer, map, relation, indication, dynamic, different, channel, feature, MIMO

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 109429344 A (VIVO COMMUNICATION TECHNOLOGY CO., LTD.) 05 March 2019 (2019-03-05) description, paragraphs 43-107, 154-195, and 265-268 | 1-5, 8-13, 16-20, 23-28, 31-34 |
| X | WO 2020060375 A1 (LG ELECTRONICS INC.) 26 March 2020 (2020-03-26) claim 1, and description, paragraphs 480-488 | 1, 5, 9, 12, 16, 20, 24, 27, 31-34 |
| X | CN 109936401 A (SONY CORP.) 25 June 2019 (2019-06-25) description, paragraphs 53-89, and figure 1 | 1, 5, 9, 12, 16, 20, 24, 27, 31-34 |
| A | CN 110741611 A (AT&T INTELLECTUAL PROPERTY I, L.P.) 31 January 2020 (2020-01-31) entire document | 1-34 |
| A | US 2019149205 A1 (LG ELECTRONICS INC.) 16 May 2019 (2019-05-16) entire document | 1-34 |
| A | EP 3361660 A1 (NOKIA TECHNOLOGIES OY) 15 August 2018 (2018-08-15) entire document | 1-34 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 June 2023** | **04 July 2023** |

| Name and mailing address of the ISA/CN | Authorized officer |
|---|---|
| China National Intellectual Property Administration (ISA/CN) China No. 6, Xitucheng Road, Jimenqiao, Haidian District, Beijing 100088 | |
| | Telephone No. |

Form PCT/ISA/210 (second sheet) (July 2022)

**INTERNATIONAL SEARCH REPORT**

International application No.

**PCT/CN2023/089749**

**C.    DOCUMENTS CONSIDERED TO BE RELEVANT**

| Category* | Citation of document, with indication, where appropriate, of the relevant passages | Relevant to claim No. |
|---|---|---|
| A | AT&T. "Remaining Issue for CW to Layer Mapping"" *R1-1707737, 3GPP TSG RAN WG1 Meeting #89*, 07 May 2017 (2017-05-07), sections 2-3 and 6 | 1-34 |
| A | SAMSUNG. "Summary of Open Issues on Layer Mapping" *R1-1714662, 3GPP TSG RAN WG1 Meeting #90*, 26 August 2017 (2017-08-26), sections 1-3 | 1-34 |

Form PCT/ISA/210 (second sheet) (July 2022)

| INTERNATIONAL SEARCH REPORT | | | International application No. |
|---|---|---|---|
| Information on patent family members | | | **PCT/CN2023/089749** |

| Patent document cited in search report | | | Publication date (day/month/year) | Patent family member(s) | | | Publication date (day/month/year) |
|---|---|---|---|---|---|---|---|
| CN | 109429344 | A | 05 March 2019 | None | | | |
| WO | 2020060375 | A1 | 26 March 2020 | None | | | |
| CN | 109936401 | A | 25 June 2019 | JP | 2021507599 | A | 22 February 2021 |
| | | | | US | 2022094402 | A1 | 24 March 2022 |
| | | | | EP | 3713120 | A1 | 23 September 2020 |
| | | | | WO | 2019114681 | A1 | 20 June 2019 |
| | | | | US | 2021091831 | A1 | 25 March 2021 |
| | | | | KR | 20200098567 | A | 20 August 2020 |
| | | | | CN | 111052648 | A | 21 April 2020 |
| CN | 110741611 | A | 31 January 2020 | WO | 2018231401 | A1 | 20 December 2018 |
| | | | | US | 2019334593 | A1 | 31 October 2019 |
| | | | | US | 2018367195 | A1 | 20 December 2018 |
| | | | | EP | 3639491 | A1 | 22 April 2020 |
| | | | | JP | 2020523923 | A | 06 August 2020 |
| | | | | US | 2020244323 | A1 | 30 July 2020 |
| | | | | KR | 20200006588 | A | 20 January 2020 |
| US | 2019149205 | A1 | 16 May 2019 | WO | 2017204436 | A1 | 30 November 2017 |
| EP | 3361660 | A1 | 15 August 2018 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210441001